(19) 

Europäisches
Patentamt
European
Patent Office
Office européen
des brevets

(11) **EP 4 380 219 A1**

(12) **EUROPEAN PATENT APPLICATION**
published in accordance with Art. 153(4) EPC

(43) Date of publication:
**05.06.2024 Bulletin 2024/23**

(21) Application number: **22848461.4**

(22) Date of filing: **22.07.2022**

(51) International Patent Classification (IPC):
**H04W 24/02** (2009.01)  **H04B 17/309** (2015.01)

(52) Cooperative Patent Classification (CPC):
**H04B 17/309; H04W 24/02**

(86) International application number:
**PCT/CN2022/107545**

(87) International publication number:
**WO 2023/005856 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 CN 202110875718**

(71) Applicant: **Huawei Technologies Co., Ltd.
Shenzhen, Guangdong 518129 (CN)**

(72) Inventors:
• **DU, Rui**
**Shenzhen, Guangdong 518129 (CN)**
• **ZHU, Xiang**
**Harbin, Heilongjiang 150001 (CN)**

• **LIU, Chenchen**
**Shenzhen, Guangdong 518129 (CN)**
• **HU, Mengshi**
**Shenzhen, Guangdong 518129 (CN)**
• **HAN, Xiao**
**Shenzhen, Guangdong 518129 (CN)**
• **YANG, Xun**
**Shenzhen, Guangdong 518129 (CN)**
• **ZHANG, Yun**
**Harbin, Heilongjiang 150001 (CN)**
• **LI, Yang**
**Harbin, Heilongjiang 150001 (CN)**

(74) Representative: **Huawei European IPR
Huawei Technologies Duesseldorf GmbH
Riesstraße 25
80992 München (DE)**

(54) **COMMUNICATION METHOD AND APPARATUS**

(57)     This application provides a communication method and apparatus, which can increase an amount of valid information in a CSI feedback matrix, to help a transmit end to extract attribute information of a target object, and improve a perception capability of the target object. The method includes: A first device receives at least one channel sounding frame from a second device; and determines at least one first CSI matrix $H_1$ based on the at least one channel sounding frame, where $H_1$ indicates a channel state, and the channel sounding frame is in a one-to-one correspondence with $H_1$. Then the first device performs eigenvalue decomposition on a covariance matrix $R_{HH}$ of $H_2$ to obtain an eigenvector matrix $U$ and an eigenvalue matrix $\Sigma$, where $H_2$ is determined based on $H_1$, and $H_2$ is a CSI matrix corresponding to any subcarrier. The first device determines, based on $H_2$, $U$, and $\Sigma$, a second CSI matrix $V$ corresponding to $H_1$, and feeds back at least one matrix $V$ corresponding to the at least one matrix $H_1$ to the second device, where the at least one matrix $V$ is used to determine the attribute information of the target object.

FIG. 4

**Description**

This application claims priority to Chinese Patent Application No. 202110875718.5, filed with the China National Intellectual Property Administration on July 30, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

Wireless local area network (wireless local area network, WLAN) sensing (sensing) is a technology that uses a wireless signal to sense a target object, and the target object is an object in a surrounding environment, for example, a person or a thing. Based on capabilities of radio to measure and sample an environment, the WLAN sensing provides an opportunity for each communication path between two physical devices to extract information about the surrounding environment of the communication path. Currently, WLAN devices are widely deployed in today's society. Therefore, the WLAN sensing has a very wide application prospect.

The WLAN sensing may be used to sense a target object according to an existing standard, and a beamforming (beamforming) technology is defined in the existing standard (for example, the 802.11ac protocol). In this technology, a transmit end may generate a steering matrix (steering matrix) by relying on a channel estimation (channel estimation, CE) result fed back by a receive end, that is, a channel state information (channel state information, CSI) feedback matrix, to improve communication performance of the transmit end and the receive end.

However, in an existing solution for generating a CSI feedback matrix, phase information cannot be kept in the CSI feedback matrix. However, the phase information is crucial for extracting attribute information (for example, a target distance, a target angle, and a target Doppler shift) of the target object. For example, the target angle may be used to determine a direction of the target object, and a Doppler frequency is caused by motion of the target object. Therefore, the target Doppler shift may be used to determine a speed of the target object. However, the transmit end cannot extract the attribute information of the target object based on a reconstructed CSI feedback matrix, and therefore cannot effectively sense the target object.

**SUMMARY**

Embodiments of this application provide a communication method and apparatus, which can increase an amount of valid information in a CSI feedback matrix, to help a transmit end extract attribute information of a target object, and improve a perception capability of the target object.

To achieve the foregoing objectives, the following technical solutions are used in this application.

According to a first aspect, a communication method is provided. The method includes: A first device receives at least one channel sounding frame from a second device. The first device determines at least one first channel state information CSI matrix $H_1$ based on the at least one channel sounding frame, where $H_1$ indicates a channel state, the channel sounding frame is in a one-to-one correspondence with $H_1$. Dimensions of $H_1$ are $N_r \times N_t \times K$, where $N_t$ is a quantity of antennas of the second device, $N_r$ is a quantity of antennas of the first device, $K$ is a quantity of subcarriers that carry the channel sounding frame, and $N_t$, $N_r$, and $K$ are all positive integers. The first device performs eigenvalue decomposition on a covariance matrix $R_{HH}$ of $H_2$ to obtain an eigenvector matrix $U$ and an eigenvalue matrix $\Sigma$, where $H_2$ is determined based on $H_1$, and $H_2$ is a CSI matrix corresponding to any subcarrier. The first device determines, based on $H_2$, $U$, and $\Sigma$, a second CSI matrix $V$ corresponding to $H_1$. The first device feeds back at least one matrix $V$ corresponding to the at least one matrix $H_1$ to the second device, where the at least one matrix $V$ is used to determine attribute information of a target object.

Based on the foregoing technical solution, the first device can determine, based on the at least one received channel sounding frame, the first CSI matrix $H_1$ that indicates the channel state, and then the first device performs eigenvalue decomposition on $H_2$ to obtain the eigenvector matrix $U$ and the eigenvalue matrix $\Sigma$, where $H_2$ is determined based on $H_1$, and $H_2$ is the CSI matrix corresponding to any subcarrier. Then, the first device can determine, based on $H_2$, $U$, and $\Sigma$, the second CSI matrix $V$ corresponding to $H_1$, where $V$ accordingly obtained through solving includes phase information, and feed back the at least one matrix $V$ corresponding to the at least one matrix $H_1$ to the second device, where the at least one matrix $V$ is used to determine the attribute information of the target object. In this way, a matrix $V$ reconstructed by the second device also includes the phase information, and the attribute information of the target object may be extracted based on the phase information, so that a perception capability of the target object is improved.

In a possible design, $R_{HH}$ satisfies: $R_{HH} = H_2 H_2^H$ , and $H_2^H$ is a conjugate transpose of $H_2$.

In a possible design, a column vector $u_s$ in $U$ and a column vector $v_s$ in $V$ satisfy the following condition:

$$v_s = \frac{H_2^H u_s}{\sigma_s}$$

. $\sigma_s$ is a singular value corresponding to $v_s$, $\sigma_s$ is an arithmetic square root of a corresponding eigenvalue in $\Sigma$, $S$ is an integer from 1 to m , m is a quantity of column vectors in $V$ , and m is a positive integer. Because $\Sigma$ is a real matrix, $\sigma_s$ is used as the arithmetic square root of the corresponding eigenvalue in $\Sigma$, $\sigma_s$ does not include the phase information, and the matrix $U$ includes a part of the phase information (for example, when there is only one target object, the matrix $U$ includes phase information that is used to extract a target angle. When there are a plurality of target objects or a plurality of paths, the matrix $U$ includes the phase information that is used to extract the target angle, and information about a pairwise product between the plurality of target objects or between the plurality of paths). Correspondingly, the column vector $u_s$ in the matrix $U$ also includes a part of the phase information, and $H_2$ includes original phase information. Therefore, related phase information is correspondingly kept in $v_s$, and the related phase information is also kept in the matrix $V$, where the phase information may be used to subsequently extract the attribute information of the target object.

In a possible design, a condition for obtaining the column vectors in U includes: assigning b to an a$^{th}$ element in each column vector in U, where a is a positive integer, and b is a real number. Because phase information that is used to extract a target distance and phase information that is used to extract a target Doppler shift need to be determined based on at least two matrices $V$, in a process of solving for the at least two matrices $V$ based on $H_2$, $U$ , and $\Sigma$, solving for each column vector in the U matrix needs to satisfy a condition in the design, to ensure that the matrix $V$ obtained through solving includes valid information that is used to extract the target distance and valid information that is used to extract the target Doppler shift.

In a possible design, the attribute information of the target object includes a target distance, and the target distance is a sum of a distance between the target object and the first device and a distance between the target object and the second device. The target distance is determined by at least two matrices $V$ corresponding to one matrix $H_1$.

In a possible design, the attribute information of the target object further includes a target angle, and the target angle includes a transmit angle between the second device and the target object. The target angle is determined by one matrix $V$.

In a possible design, the attribute information of the target object further includes a target Doppler shift, and the target Doppler shift is a difference between a frequency at which the first device receives the channel sounding frame through the target object and a frequency at which the second device sends the channel sounding frame. The target Doppler shift is determined by at least one matrix $V$ corresponding to at least two matrices $H_1$.

In a possible design, one column vector in $V$ corresponds to one target object.

In a possible design, after the first device receives at least one channel sounding frame from a second device, the method further includes: The first device receives at least one trigger frame from the second device, where the at least one trigger frame indicates the first device to determine $V$ based on $H_2$, $U$ , and $\Sigma$. Based on this design, the second device notifies, in a manner in which the second device indicates to the first device, the first device to solve for $V$ by using the method provided in this embodiment of this application, which can increase an amount of valid information in a CSI feedback matrix, to help the second device extract the attribute information of the target object, and improve a perception capability of the target object.

According to a second aspect, a communication method is provided. The method includes: A second device sends at least one channel sounding frame to a first device. The second device receives, from the first device, at least one second CSI matrix $V$ corresponding to at least one matrix $H_1$, where the at least one matrix $V$ is used to determine attribute information of a target object, the at least one matrix $H_1$ is determined based on the at least one channel sounding frame, $H_1$ indicates a channel state, and the channel sounding frame is in a one-to-one correspondence with $H_1$. Dimensions of $H_1$ are $N_r \times N_t \times K$, where $N_t$ is a quantity of antennas of the second device, $N_r$ is a quantity of antennas of the first device, $K$ is a quantity of subcarriers that carry the channel sounding frame, and $N_t$, $N_r$, and $K$ are all positive integers. $V$ corresponding to $H_1$ is determined by $V$, $U$, and $\Sigma$, where $U$ is an eigenvector matrix of a covariance matrix $R_{HH}$ of $H_2$, $\Sigma$ is an eigenvalue matrix of $R_{HH}$, $H_2$ is determined based on $H_1$, and $H_2$ is a CSI matrix corresponding to any subcarrier.

In a possible design, $R_{HH}$ satisfies: $R_{HH} = H_2 H_2^H$ , and $H_2^H$ is a conjugate transpose of $H_2$.

In a possible design, a column vector $u_s$ in $U$ and a column vector $v_s$ in $V$ satisfy the following condition:

$$v_s = \frac{H_2^H u_s}{\sigma_s}$$

. $\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

In a possible design, a condition for obtaining the column vectors in U includes: assigning b to an ath element in each column vector in U, where a is a positive integer, and b is a real number.

In a possible design, the attribute information of the target object includes a target distance, and the target distance is a sum of a distance between the target object and the first device and a distance between the target object and the second device. The target distance is determined by at least two matrices $V$ corresponding to one matrix $H_1$.

In a possible design, the attribute information of the target object further includes a target angle, and the target angle includes a transmit angle between the second device and the target object. The target angle is determined by one matrix $V$.

In a possible design, the attribute information of the target object further includes a target Doppler shift, and the target Doppler shift is a difference between a frequency at which the first device receives the channel sounding frame through the target object and a frequency at which the second device sends the channel sounding frame. The target Doppler shift is determined by at least one matrix $V$ corresponding to at least two matrices $H_1$.

In a possible design, one column vector in $V$ corresponds to one target object.

In a possible design, before the second device receives, from the first device, at least one second CSI matrix $V$ corresponding to at least one matrix $H_1$, the method further includes: The second device sends at least one trigger frame to the first device, where the at least one trigger frame indicates the first device to determine $V$ based on $H_2$, $U$, and $\Sigma$.

According to a third aspect, a communication apparatus is provided, including: a transceiver unit, configured to receive at least one channel sounding frame from a second device; and a processing unit, configured to determine at least one first channel state information CSI matrix $H_1$ based on the at least one channel sounding frame, where $H_1$ indicates a channel state, the channel sounding frame is in a one-to-one correspondence with $H_1$, dimensions of $H_1$ are $N_r \times N_t \times K$, where $N_t$ is a quantity of antennas of the second device, $N_r$ is a quantity of antennas of the communication apparatus, $K$ is a quantity of subcarriers that carry the channel sounding frame, and $N_t$, $N_r$, and $K$ are all positive integers. The processing unit is further configured to perform eigenvalue decomposition on a covariance matrix $R_{HH}$ of $H_2$, to obtain an eigenvector matrix $U$ and an eigenvalue matrix $\Sigma$, where $H_2$ is determined based on $H_1$, and $H_2$ is a CSI matrix corresponding to any subcarrier. The processing unit is further configured to determine, based on $H_2$, $U$, and $\Sigma$, a second CSI matrix $V$ corresponding to $H_1$. The transceiver unit is further configured to feed back at least one matrix $V$ corresponding to the at least one matrix $H_1$ to the second device, where the at least one matrix $V$ is used to determine attribute information of a target object.

In a possible design, $R_{HH}$ satisfies: $R_{HH} = H_2 H_2^H$, and $H_2^H$ is a conjugate transpose of $H_2$.

In a possible design, a column vector $u_s$ in $U$ and a column vector $v_s$ in $V$ satisfy the following condition:

$$v_s = \frac{H_2^H u_s}{\sigma_s}$$

. $\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

In a possible design, a condition for obtaining the column vectors in U includes: assigning b to an ath element in each column vector in U, where a is a positive integer, and b is a real number.

In a possible design, the attribute information of the target object includes a target distance, and the target distance is a sum of a distance between the target object and the first device and a distance between the target object and the second device. The target distance is determined by at least two matrices $V$ corresponding to one matrix $H_1$.

In a possible design, the attribute information of the target object further includes a target angle, and the target angle includes a transmit angle between the second device and the target object. The target angle is determined by one matrix $V$.

In a possible design, the attribute information of the target object further includes a target Doppler shift, and the target Doppler shift is a difference between a frequency at which the first device receives the channel sounding frame through the target object and a frequency at which the second device sends the channel sounding frame. The target Doppler shift is determined by at least one matrix $V$ corresponding to at least two matrices $H_1$.

In a possible design, one column vector in $V$ corresponds to one target object.

In a possible design, the transceiver unit is further configured to receive at least one trigger frame from the second device, and the at least one trigger frame indicates the first device to determine $V$ based on $H_2$, $U$, and $\Sigma$.

According to a fourth aspect, a communication apparatus is provided, including: a transceiver unit, configured to send at least one channel sounding frame to a first device. The transceiver unit is further configured to receive, from the first device, at least one second CSI matrix $V$ corresponding to at least one matrix $H_1$, where the at least one matrix $V$ is used to determine attribute information of a target object, the at least one matrix $H_1$ is determined based on the at least one channel sounding frame, $H_1$ indicates a channel state, and the channel sounding frame is in a one-to-one correspondence with $H_1$. Dimensions of $H_1$ are $N_r \times N_t \times K$, where $N_t$ is a quantity of antennas of a second device, $N_r$ is a quantity of antennas of the first device, $K$ is a quantity of subcarriers that carry the channel sounding frame, and $N_t$, $N_r$, and $K$ are all positive integers. $V$ corresponding to $H_1$ is determined by $H_2$, $U$, and $\Sigma$, where $U$ is an eigenvector matrix of a covariance matrix $R_{HH}$ of $H_2$, $\Sigma$ is an eigenvalue matrix of $R_{HH}$, $H_2$ is determined based on $H_1$, and $H_2$ is a CSI matrix corresponding to any subcarrier.

Optionally, the transceiver unit may include a sending unit and a receiving unit. The transceiver unit may be a whole, or may be separate units. This is not limited in this embodiment of this application.

Optionally, the communication apparatus may further include a processing unit, and the processing unit is configured to generate the at least one channel sounding frame.

In a possible design, $R_{HH}$ satisfies: $R_{HH} = H_2 H_2^H$, and $H_2^H$ is a conjugate transpose of $H_2$.

In a possible design, a column vector $u_s$ in $U$ and a column vector $v_s$ in $V$ satisfy the following condition:

$$v_s = \frac{H_2^H u_s}{\sigma_s}$$

. $\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

In a possible design, a condition for obtaining the column vectors in U includes: assigning b to an $a^{th}$ element in each column vector in U, where a is a positive integer, and b is a real number.

In a possible design, the attribute information of the target object includes a target distance, and the target distance is a sum of a distance between the target object and the first device and a distance between the target object and the second device. The target distance is determined by at least two matrices $V$ corresponding to one matrix $H_1$.

In a possible design, the attribute information of the target object further includes a target angle, and the target angle includes a transmit angle between the second device and the target object. The target angle is determined by one matrix $V$.

In a possible design, the attribute information of the target object further includes a target Doppler shift, and the target Doppler shift is a difference between a frequency at which the first device receives the channel sounding frame through the target object and a frequency at which the second device sends the channel sounding frame. The target Doppler shift is determined by at least one matrix $V$ corresponding to at least two matrices $H_1$.

In a possible design, one column vector in $V$ corresponds to one target object.

In a possible design, the transceiver unit is further configured to send at least one trigger frame to the first device, and the at least one trigger frame indicates the first device to determine $V$ based on $H_2$, $U$, and $\Sigma$.

According to a fifth aspect, a communication apparatus is provided. The communication apparatus may be a first device or may be an apparatus in the first device. In a design, the apparatus may include modules that are configured to perform and are in a one-to-one correspondence with the methods/operations/steps/actions described in the first aspect or any design of the first aspect. The foregoing module may be a hardware circuit or software, or may be implemented in a combination of the hardware circuit and the software.

According to a sixth aspect, a communication apparatus is provided. The communication apparatus may be a second device or may be an apparatus in the second device. In a design, the apparatus may include modules that are configured to perform and are in a one-to-one correspondence with the methods/operations/steps/actions described in the second aspect or any design of the second aspect. The foregoing module may be a hardware circuit or software, or may be implemented in a combination of the hardware circuit and the software.

According to a seventh aspect, a communication apparatus is provided. The communication apparatus may be a first device, or may be a chip or a chip system disposed inside the first device. The communication apparatus includes a processor and a transceiver. The processor is configured to perform a determining operation, an eigenvalue decomposition operation, and the like in the communication method in any design of the first aspect. The transceiver is configured to receive a control signal of the processor to perform receiving and sending operations in the communication method in any design of the first aspect. The transceiver may be a transceiver circuit or an input/output port. In this embodiment of this application, the transceiver may alternatively be an antenna.

In a possible design, the communication apparatus in the seventh aspect may further include a memory. The memory is coupled to the processor, and is configured to store a computer program. The computer program is executed by the processor, so that the communication apparatus performs the communication method in any design of the first aspect.

According to an eighth aspect, a communication apparatus is provided. The communication apparatus may be a second device, or may be a chip or a chip system disposed inside the second device. The communication apparatus includes a transceiver. The transceiver is configured to perform receiving and sending operations in the communication method in any design of the second aspect. The transceiver may be a transceiver circuit or an input/output port. In this embodiment of this application, the transceiver may alternatively be an antenna.

In a possible design, the communication apparatus in the eighth aspect may further include a processor. The processor is configured to perform a determining operation, a generation operation, and the like in the communication method in any design of the second aspect, for example, generate at least one channel sounding frame.

In a possible design, the communication apparatus in the eighth aspect may further include a memory. The memory is coupled to the processor, and is configured to store a computer program. The computer program is executed by the processor, so that the communication apparatus performs the communication method in any design of the second aspect.

According to a ninth aspect, a computer-readable storage medium is provided. The computer-readable storage medium includes a computer program or instructions, and when the computer program or the instructions are run on a computer, the computer is enabled to perform the communication method in any design of the first aspect and the second aspect.

According to a tenth aspect, a computer program product is provided. The computer program product includes a computer program or instructions, and when the computer program or the instructions are run on a computer, the computer is enabled to perform the communication method in any design of the first aspect and the second aspect.

According to an eleventh aspect, a chip is provided. The chip includes a processing circuit and a transceiver pin. Optionally, the chip further includes a memory. The processing circuit is configured to perform a determining operation, an eigenvalue decomposition operation, and the like in the communication method in any possible design of the first aspect. The transceiver pin is controlled by the processing circuit to perform receiving and sending operations in the communication method in any possible design of the first aspect. The memory is configured to store instructions, and the instructions are invoked by the processor to perform the communication method in any possible design of the first aspect.

According to a twelfth aspect, a chip is provided. The chip includes a transceiver pin. Optionally, the chip further includes a processing circuit and a memory. The processing circuit is configured to perform a determining operation, a generation operation, and the like in the communication method in any possible design of the second aspect. The transceiver pin is controlled by the processing circuit to perform receiving and sending operations in the communication method in any possible design of the second aspect. The memory is configured to store instructions, and the instructions are invoked by the processor to perform the communication method in any possible design of the second aspect.

According to a thirteenth aspect, a communication system is provided, including a first device and a second device. The first device is configured to perform the communication method in any design of the first aspect. The second device is configured to perform the communication method in any design of the second aspect.

For technical effect brought by any design of the second aspect to the thirteenth aspect, refer to technical effect brought by a corresponding design of the first aspect. Details are not described herein again.

## BRIEF DESCRIPTION OF DRAWINGS

FIG. 1 is a schematic flowchart of feeding back CSI information according to an embodiment of this application;
FIG. 2 is a schematic diagram of an architecture of a communication system according to an embodiment of this application;
FIG. 3 is a schematic diagram of an angle of departure and an angle of arrival according to an embodiment of this application;
FIG. 4 is a schematic flowchart of a communication method according to an embodiment of this application;
FIG. 5 is a schematic diagram of a frame structure of a trigger frame according to an embodiment of this application;
FIG. 6 is a schematic diagram of a Common Info field according to an embodiment of this application;
FIG. 7 is a schematic diagram of another Common Info field according to an embodiment of this application;
FIG. 8 is a schematic diagram of a frame structure of another trigger frame according to an embodiment of this application;
FIG. 9a is a schematic diagram 1 of a simulation result of extracting distance information in a CSI feedback matrix obtained by using an existing solution;
FIG. 9b is a schematic diagram 1 of a simulation result of extracting angle information in a CSI feedback matrix obtained by using an existing solution;
FIG. 9c is a schematic diagram 1 of a simulation result of extracting Doppler information in a CSI feedback matrix obtained by using an existing solution;
FIG. 9d is a schematic diagram 2 of a simulation result of extracting distance information in a CSI feedback matrix obtained by using an existing solution;

FIG. 9e is a schematic diagram 2 of a simulation result of extracting angle information in a CSI feedback matrix obtained by using an existing solution;

FIG. 9f is a schematic diagram 2 of a simulation result of extracting Doppler information in a CSI feedback matrix obtained by using an existing solution;

FIG. 10a is a schematic diagram 1 of a simulation result of extracting distance information in a CSI feedback matrix obtained by using a solution according to an embodiment of this application;

FIG. 10b is a schematic diagram 1 of a simulation result of extracting angle information in a CSI feedback matrix obtained by using a solution according to an embodiment of this application;

FIG. 10c is a schematic diagram 1 of a simulation result of extracting Doppler information in a CSI feedback matrix obtained by using a solution according to an embodiment of this application;

FIG. 10d is a schematic diagram 2 of a simulation result of extracting distance information in a CSI feedback matrix obtained by using a solution according to an embodiment of this application;

FIG. 10e is a schematic diagram 2 of a simulation result of extracting angle information in a CSI feedback matrix obtained by using a solution according to an embodiment of this application;

FIG. 10f is a schematic diagram 2 of a simulation result of extracting Doppler information in a CSI feedback matrix obtained by using a solution according to an embodiment of this application;

FIG. 11a is a schematic diagram 3 of a simulation result of extracting distance information in a CSI feedback matrix obtained by using an existing solution;

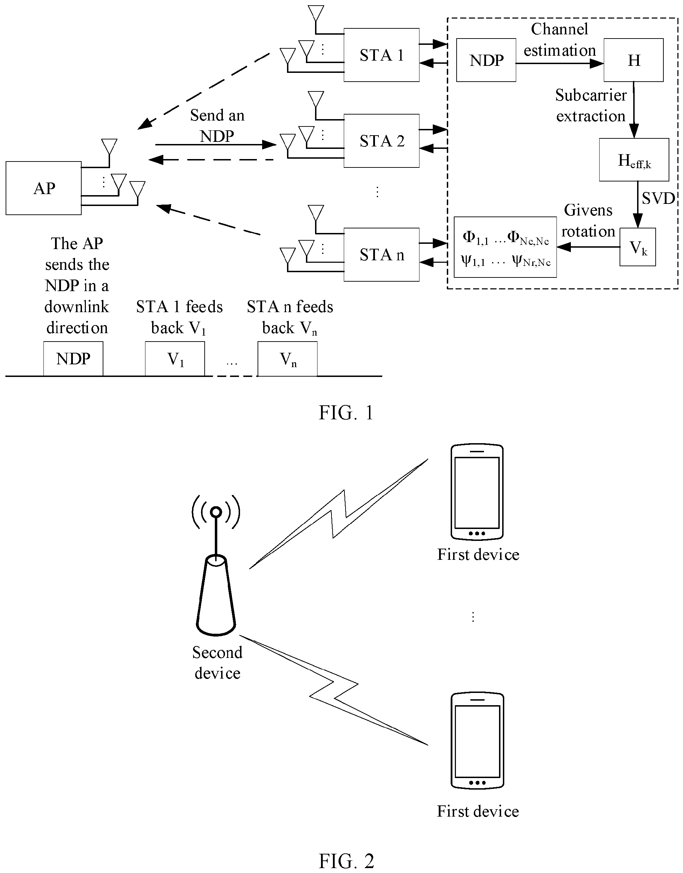

FIG. 1 1b is a schematic diagram 3 of a simulation result of extracting angle information in a CSI feedback matrix obtained by using an existing solution;

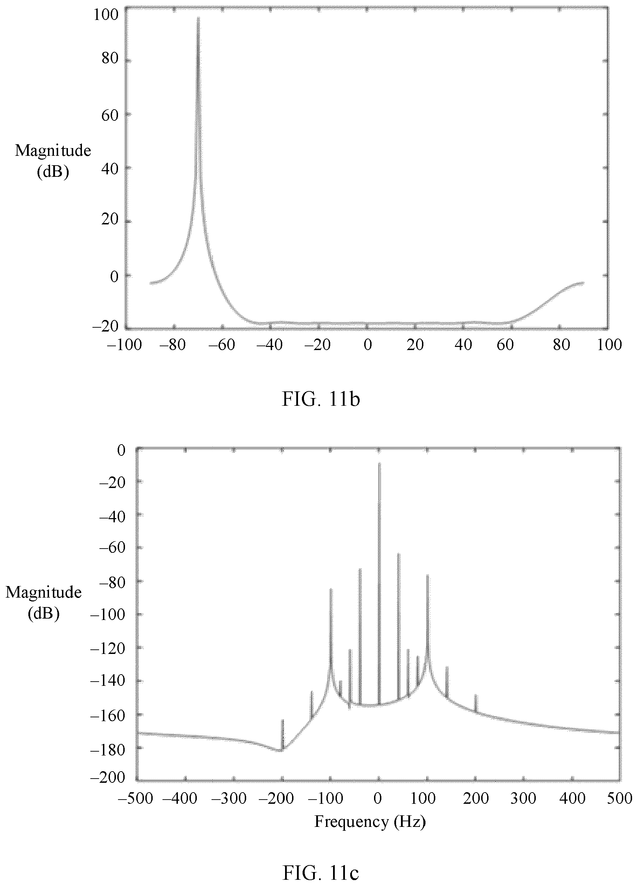

FIG. 11c is a schematic diagram 3 of a simulation result of extracting Doppler information in a CSI feedback matrix obtained by using an existing solution;

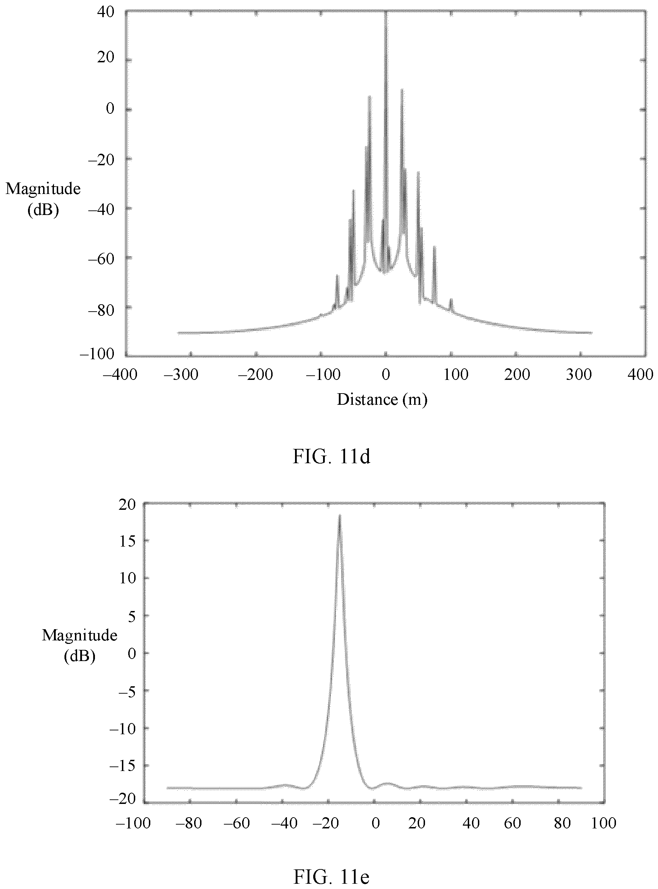

FIG. 11d is a schematic diagram 4 of a simulation result of extracting distance information in a CSI feedback matrix obtained by using an existing solution;

FIG. 11e is a schematic diagram 4 of a simulation result of extracting angle information in a CSI feedback matrix obtained by using an existing solution;

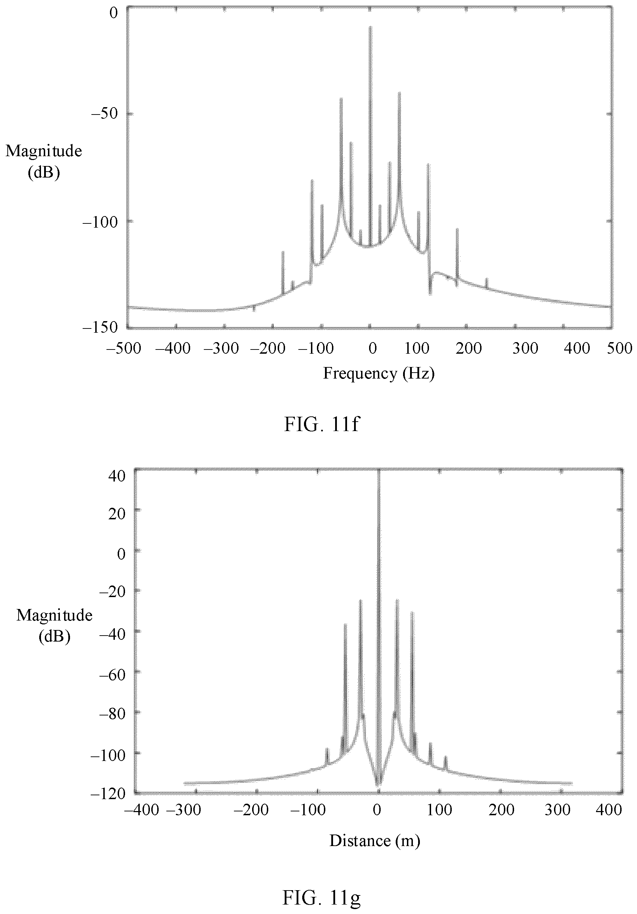

FIG. 11f is a schematic diagram 4 of a simulation result of extracting Doppler information in a CSI feedback matrix obtained by using an existing solution;

FIG. 11g is a schematic diagram 5 of a simulation result of extracting distance information in a CSI feedback matrix obtained by using an existing solution;

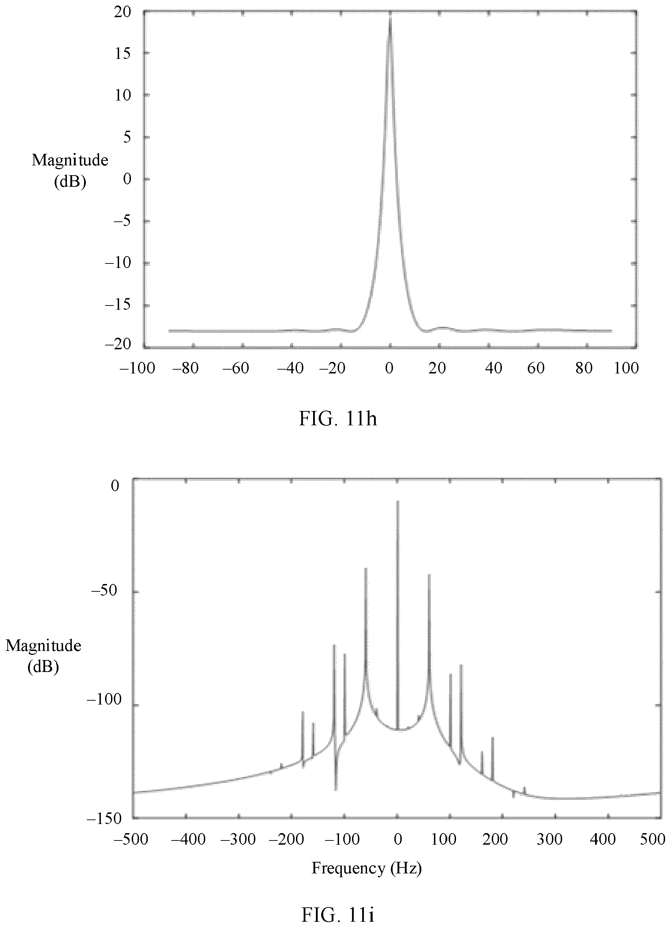

FIG. 11h is a schematic diagram 5 of a simulation result of extracting angle information in a CSI feedback matrix obtained by using an existing solution;

FIG. 11i is a schematic diagram 5 of a simulation result of extracting Doppler information in a CSI feedback matrix obtained by using an existing solution;

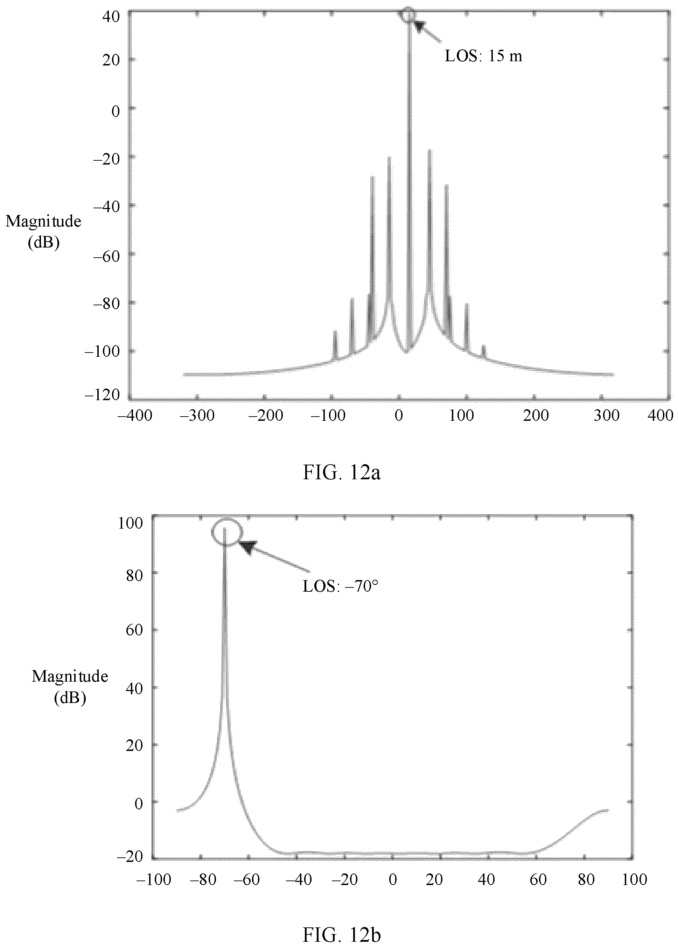

FIG. 12a is a schematic diagram 3 of a simulation result of extracting distance information in a CSI feedback matrix obtained by using a solution according to an embodiment of this application;

FIG. 12b is a schematic diagram 3 of a simulation result of extracting angle information in a CSI feedback matrix obtained by using a solution according to an embodiment of this application;

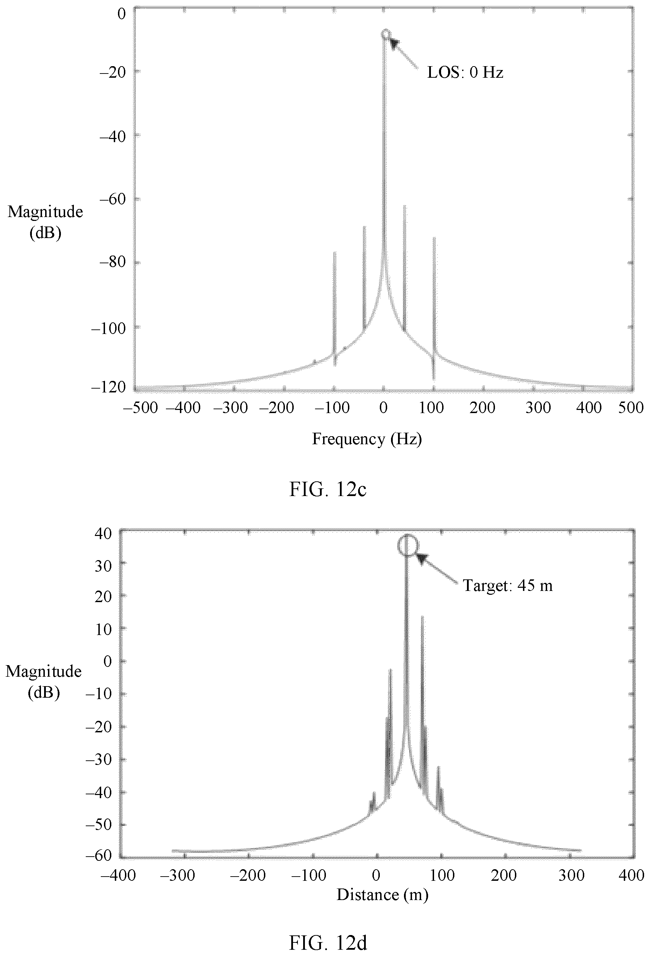

FIG. 12c is a schematic diagram 3 of a simulation result of extracting Doppler information in a CSI feedback matrix obtained by using a solution according to an embodiment of this application;

FIG. 12d is a schematic diagram 4 of a simulation result of extracting distance information in a CSI feedback matrix obtained by using a solution according to an embodiment of this application;

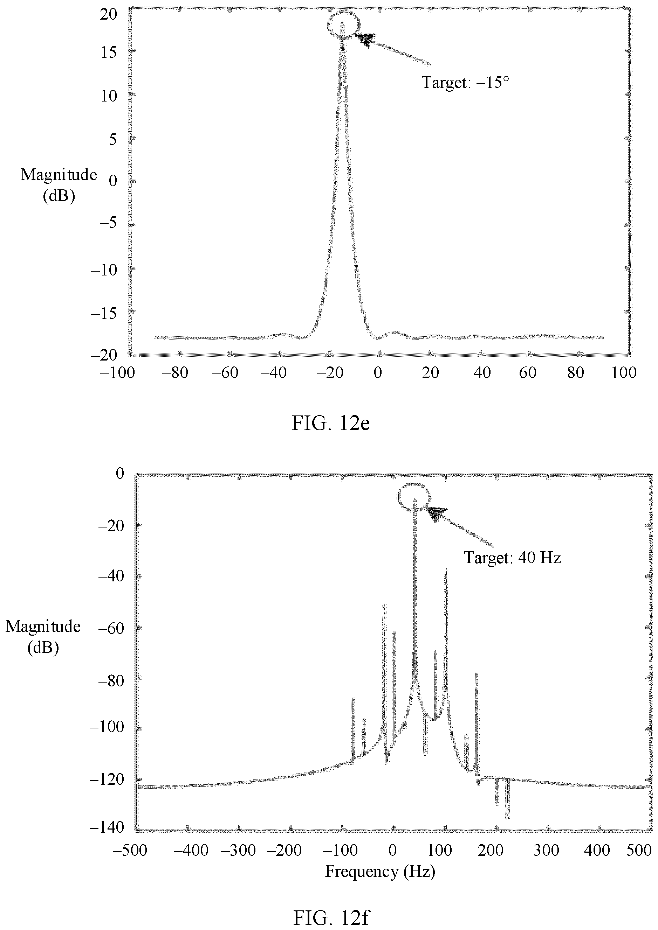

FIG. 12e is a schematic diagram 4 of a simulation result of extracting angle information in a CSI feedback matrix obtained by using a solution according to an embodiment of this application;

FIG. 12f is a schematic diagram 4 of a simulation result of extracting Doppler information in a CSI feedback matrix obtained by using a solution according to an embodiment of this application;

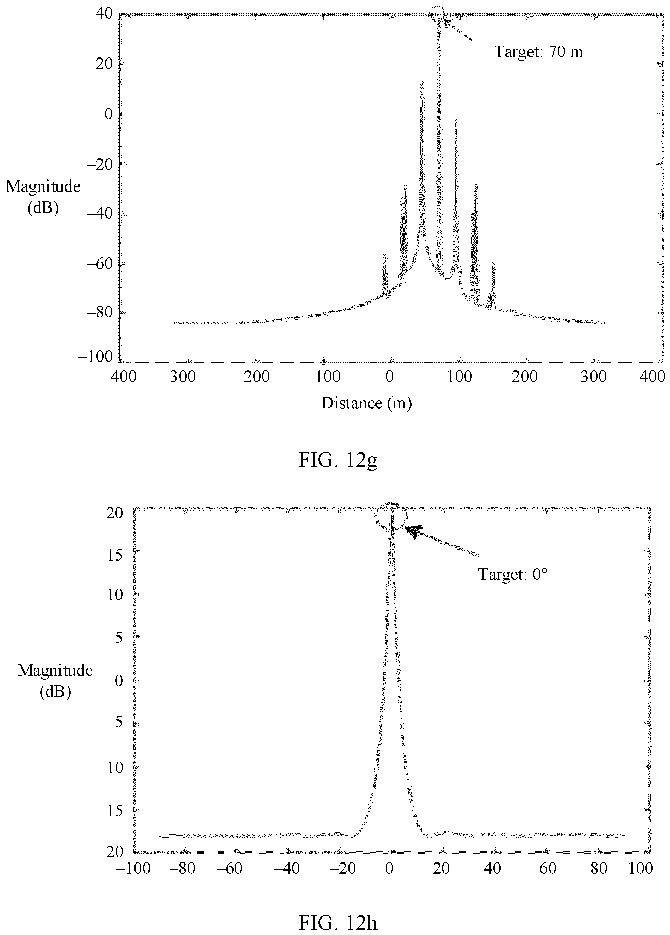

FIG. 12g is a schematic diagram 5 of a simulation result of extracting distance information in a CSI feedback matrix obtained by using a solution according to an embodiment of this application;

FIG. 12h is a schematic diagram 5 of a simulation result of extracting angle information in a CSI feedback matrix obtained by using a solution according to an embodiment of this application;

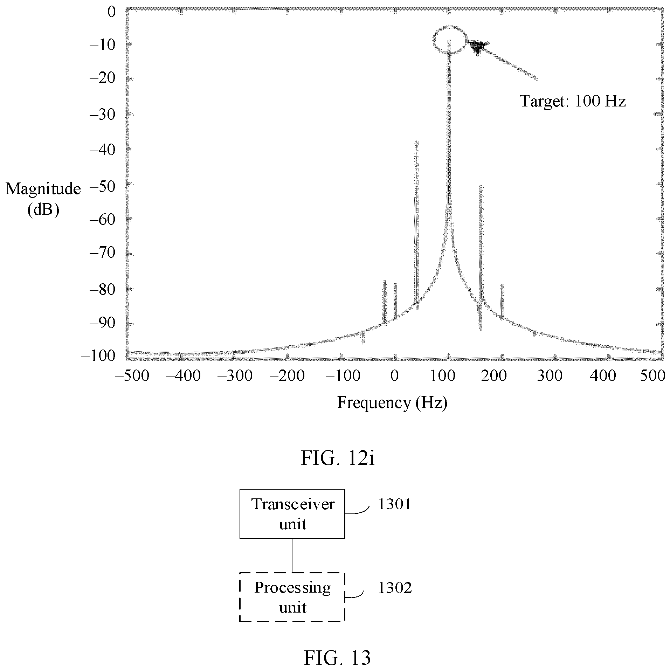

FIG. 12i is a schematic diagram 5 of a simulation result of extracting Doppler information in a CSI feedback matrix obtained by using a solution according to an embodiment of this application;

FIG. 13 is a schematic diagram of a structure of a communication apparatus according to an embodiment of this application; and

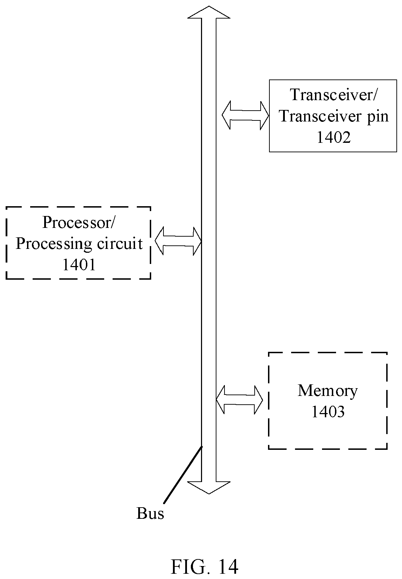

FIG. 14 is a schematic diagram of a structure of another communication apparatus according to an embodiment of this application.

**DESCRIPTION OF EMBODIMENTS**

In the descriptions of this application, unless otherwise specified, "/" means "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference.

It should be noted that, in this application, terms such as "example" or "for example" is used to represent giving an example, an illustration, or a description. Any embodiment or design solution described as an "example" or "for example" in this application should not be explained as being more preferred or having more advantages than another embodiment or design solution. To be precise, use of the words such as "example" or "for example" is intended to present a related concept in a specific manner.

In the descriptions of this application, an "indication" may include a direct indication and an indirect indication, or may include an explicit indication and an implicit indication. Information indicated by specific information (for example, indication information in the following descriptions) is referred to as to-be-indicated information. In a specific implementation process, the to-be-indicated information may be indicated in a plurality of manners. For example, the to-be-indicated information may be directly indicated, where the to-be-indicated information, an index of the to-be-indicated information, or the like is directly indicated. For another example, the to-be-indicated information may alternatively be indirectly indicated by indicating another information. There is an association relationship between the another information and the to-be-indicated information. For another example, only a part of the to-be-indicated information may alternatively be indicated, and another part of the to-be-indicated information is already known or pre-agreed on. In addition, specific information may alternatively be indicated by using an arrangement sequence of a plurality of pieces of information that is pre-agreed on (for example, stipulated in a protocol), to reduce indication overheads to some extent.

In embodiments of this application, sometimes a subscript such as $W_1$ may be written in an incorrect form such as W1. Meanings expressed by the terms are consistent when differences of the terms are not emphasized.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

First, for ease of understanding, the following first describes related terms and concepts that may be used in embodiments of this application.

1. Beamforming

The beamforming is a concept derived from an adaptive antenna. A receive end performs weighted combination on signals received by a plurality of antenna array elements, to form a required ideal signal. If a beamforming technology is used, a multi-antenna system needs to be used, for example, a multiple-input multiple-output (multiple-input multiple-output, MIMO) system, where not only a plurality of receiving antennas but also a plurality of transmitting antennas may be used. Because a plurality of groups of antennas are used, a same spatial stream (spatial stream) corresponding to radio signals from a transmit end to a receive end is transmitted by using a plurality of paths. Using a specific algorithm to process the signals that are received by using a plurality of antennas at the receive end can improve a signal-to-noise ratio.

The transmit end sends a sounding signal, such as a null data packet (null data packet, NDP), to the receive end, and the receive end performs channel estimation and feeds back a result of the channel estimation, that is, a CSI matrix, to the transmit end, so that the transmit end can generate a steering matrix, to improve communication performance.

Currently, a manner in which the receive end provides feedback to the transmit end includes implicit feedback and explicit feedback. The implicit feedback means that the receive end does not feed back specific information of the CSI, but feeds back a response data packet such as the NDP to the transmit end, and the transmit end estimates specific information of the CSI based on the received data packet. The explicit feedback means that the receive end performs channel estimation, generates the specific information of the CSI, and feeds back the specific information of the CSI to the transmit end.

The explicit feedback is used as a mainstream feedback manner. As shown in FIG. 1, a specific procedure includes: The transmit end (for example, an access point (access point, AP)) generates an NDP including a preamble, where the NDP includes training sequences such as a short training field (short training field, STF) and a long training field (long training field, LTF). These training sequences are known fixed symbols. An orthogonal frequency division multiplexing (orthogonal frequency division multiplexing, OFDM) signal is modulated by using inverse fast Fourier transform (inverse fast fourier transform, IFFT), so that a baseband digital signal may be obtained. Then digital-to-analog conversion and up-conversion modulation are performed on the baseband digital signal, to convert the baseband digital signal into a radio frequency signal and send the radio frequency signal to an air interface. The receive end obtains the NDP after down-conversion, sampling, and OFDM demodulation. The transmit end may send the NDP in a broadcast manner. The receive end (for example, a STA 1) obtains a channel matrix $H$ after performing channel estimation based on the received NDP, and then may obtain, based on $H$, a channel matrix $H_{eff}$ corresponding to each subcarrier. One channel may include a plurality of subcarriers, and one channel matrix $H$ may correspond to a plurality of channel matrices $H_{eff}$. For example, as shown in FIG. 1, a channel matrix corresponding to a $k^{th}$ subcarrier may be represented as $H_{eff,k}$. The channel matrix may also be referred to as a CSI matrix. It should be noted that, without an additional description, the channel matrix mentioned in this application has a same meaning as the CSI matrix, and is uniformly described herein. A process of extracting a subcarrier shown in FIG. 1 is optional, and an objective of extracting the subcarrier is to reduce an amount of information feedback.

Based on different feedback content in a displayed feedback, there may be the following three feedback manners:

    (1) Feed back an original CSI matrix, for example, the matrix $H$ or the matrix $H_{eff,k}$ shown in FIG. 1.
    (2) Feed back a beamforming matrix that is not compressed, for example, a matrix $V_k$ shown in FIG. 1.
    (3) Feed back an angle value of a $V_k$ matrix obtained through compression and givens rotation (givens rotation), for example, an angle value $\phi$ and an angle value $\psi$ shown in FIG. 1.

2. CSI

The CSI is used to feed back a status of a current radio channel. In a wireless fidelity (wireless fidelity, Wi-Fi) protocol, measurement is performed on each OFDM subcarrier to obtain a CSI matrix corresponding to the OFDM subcarrier. A quantity of rows of the CSI matrix is a quantity of transmitting antennas, and a quantity of columns of the CSI matrix is a quantity of receiving antennas. An element of each CSI matrix is a complex number including a real part and an imaginary part.

3. Singular value decomposition (singular value decomposition, SVD)

The SVD may represent a complex matrix by multiplying several smaller and simpler submatrices. These small matrices describe important features of the complex matrix.

As shown in FIG. 1, after obtaining channel matrix $H_{eff}$ on each subcarrier, a receive end may decompose the channel matrix $H_{eff}$ through the SVD. Dimension of the matrix are $N_r \times N_{sts}$, where $N_r$ is a quantity of receiving antennas, $N_{sts}$ is a quantity of spatial streams, and both $N_r$ and $N_{sts}$ are positive integers.

A $k^{th}$ subcarrier is used as an example. A channel matrix $H_{eff,k}$ on the $k^{th}$ subcarrier may be decomposed into a form of Formula 1.1 through the SVD.

$$H_k Q_k = U_k \Sigma_k V_k^H \qquad\qquad 1.1$$

In Formula 1.1, $H_k Q_k = H_{eff,k}$, $H_k$ is a real channel matrix, dimensions are $N_r \times N_t$, where $N_t$ is a quantity of transmitting antennas, and $N_r$ is a positive integer. $Q_k$ is an orthogonal spatial stream mapping matrix, and is used to map transmitting data to the transmitting antenna, and dimensions of $Q_k$ are $N_t \times N_{sts}$.

For ease of simplicity, in this solution, $Q_k$ is used as an identity matrix, and $N_t = N_{sts}$ is used for analysis and description. In this case, $H_k Q_k = H_k$, that is, $H_k = H_{eff,k}$, and therefore, dimensions of $H_{eff,k}$ are also $N_r \times N_t$. It may be understood that performing SVD decomposition on $H_{eff,k}$ means performing SVD decomposition on $H_k$. $V_k$ is a CSI matrix that needs to be fed back to a transmit end, and $V_k^H$ is a conjugate transpose of $V_k$. $U_k$ and $V_k$ are orthogonal matrices, $\Sigma_k$ is a diagonal matrix, and elements of $\Sigma_k$ on a diagonal line are singular values of the matrix $H_{eff,k}$.

For the $k^{th}$ subcarrier, the transmit end may construct a steering matrix $Q_{steer,k}$ based on the matrix $V_k$. The steering matrix $Q_{steer,k}$ may be used to modulate the transmitting signal, and may be represented in a form of Formula 1.2.

$$Q_{steer,k} = Q_k V_k \qquad\qquad 1.2$$

A transmitting signal *S* obtained after an original transmitting signal *s'* is modulated by the steering matrix $Q_{\text{steer},k}$ shown in Formula 1.2 may be represented in a form of Formula 1.3.

$$s = Q_{\text{steer},k} s'$$ 1.3

After the modulated transmitting signal *S*, namely, the precoded transmitting signal *S*, is transmitted through a channel, a signal *r* received by the receive end may be represented in a form of Formula 1.4.

$$r = U_k \Sigma_k V_k^H Q_k V_k s' + n$$

After simplification, the following is obtained:

$$r = U_k \Sigma_k V_k^H V_k s' + n = U_k \Sigma_k s' + n$$ 1.4

*n* in Formula 1.4 is noise.

After the receive end left-multiplies the received signal *r* by a matrix $U_k^H$, the following may be obtained:

$$U_k^H r = U_k^H U_k \Sigma_k s' + U_k^H n$$ 1.5

It is denoted as:

$$r' = U_k^H r, \quad n' = U_k^H n$$ 1.6

In this case:

$$r' = \Sigma_k s' + n'$$ 1.7

It can be learned from Formula 1.7 that, because $\Sigma_k$ is a diagonal matrix, a process of performing SVD decomposition is essentially a process of channel matrix diagonalization. To be specific, the receive end feeds back, to the transmit end, a matrix $V_k$ that is obtained through SVD decomposition on the channel matrix $H_{eff,k}$, and the transmit end constructs the steering matrix $Q_{\text{steer},k}$ based on the matrix $V_k$, modulates the original transmitting signal by using the matrix $Q_{\text{steer},k}$. After the modulated signal is transmitted through the channel, the signal received by the receive end is equivalent to a signal that is obtained after the original transmitting signal is transmitted by using a diagonalized channel matrix. Because one column in *s'* corresponds to one data stream, a plurality of data streams are transmitted by using the diagonalized channel matrix, which means that the plurality of data streams are transmitted in parallel in the channel without interfering with each other. Therefore, implementing diagonalization of the channel matrix helps improve communication performance.

4. Givens rotation

In a compression feedback manner, a receive end compresses a matrix $V_k$ into a series of angle values by using the givens rotation, and then feeds back the angle values to a transmit end, to implement compression feedback. The transmit end may reconstruct the matrix $V_k$ based on the received angle values, and complete MIMO precoding, to improve communication performance. It is assumed that dimensions of the matrix $V_k$ are $N_r \times N_c$, where $N_r$ is a quantity of rows of the matrix $V_k$, and $N_c$ is a quantity of columns of the matrix $V_k$. The matrix $V_k$ compressed by using the givens rotation may be represented in a form of Formula 1.8.

$$V_k = \left[ \prod_{i=1}^{\min(N_c, N_r-1)} \left[ D_i \left( 1_{i-1} e^{j\phi_{i,i}} \cdots e^{j\phi_{N_r-1,i}} 1 \right) \prod_{l=i+1}^{N_r} G_{li}^T (\psi_{li}) \right] \right] \tilde{I}_{N_r \times N_c}$$ 1.8

$D_i\left(1_{i-1}e^{j\phi_{i,i}} \cdots e^{j\phi_{N_r-1,i}}1\right)$ is a diagonal matrix with $N_r \times N_c$, as shown in Formula 1.9. $1_{i-1}$ represents a sequence whose length is $i - 1$, and elements in the sequence are all 1. $\tilde{I}_{Nr \times Nc}$ is a generalized identity matrix whose matrix dimensions are $N_r \times N_c$.

$$D_i\left(1_{i-1}e^{j\phi_{i,i}} \ldots e^{j\phi_{N_r-1,i}}1\right) = \begin{bmatrix} I_{i-1} & 0 & 0 & \ldots & 0 \\ 0 & e^{j\phi_{i,i}} & 0 & \ldots & 0 \\ 0 & 0 & \ddots & \ldots & 0 \\ \vdots & \vdots & \vdots & e^{j\phi_{N_r-1,i}} & 0 \\ 0 & 0 & 0 & 0 & 1 \end{bmatrix} \qquad 1.9$$

$G_{li}(\psi)$ in Formula 1.8 is a givens rotation matrix. As shown in Formula 1.10, $G_{li}^T$ is a transposed matrix of $G_{li}(\psi)$.

$$G_{li}(\psi) = \begin{bmatrix} I_{i-1} & 0 & 0 & 0 & 0 \\ 0 & \cos(\psi) & 0 & \sin(\psi) & 0 \\ 0 & 0 & I_{l-i-1} & 0 & 0 \\ 0 & -\sin(\psi) & 0 & \cos(\psi) & 0 \\ 0 & 0 & 0 & 0 & I_{N_r-l} \end{bmatrix} \qquad 1.10$$

$I_{i-1}$ in Formula 1.9 and Formula 1.10 is an identity matrix with an $(i-1)^{th}$ order, and $I_{l-i-1}$ and $I_{Nr-l}$ in Formula 1.10 are respectively an identity matrix with an $(l-i-1)^{th}$ order and an identity matrix with an $(N_r-l)^{th}$ order.

$\tilde{I}_{Nr \times Nc}$ in Formula 1.8 is a givens rotation matrix, as shown in Formula 1.11.

$$\tilde{I}_{N_r \times N_c} = \begin{bmatrix} 1 & 0 & \cdots & 0 \\ 0 & 1 & \cdots & 0 \\ \vdots & \vdots & \ddots & 0 \\ 0 & 0 & \cdots & 1 \\ 0 & 0 & \cdots & 0 \end{bmatrix} \qquad 1.11$$

The foregoing describes related terms and concepts that may be used in embodiments of this application. Details are not described below again.

Currently, the channel matrix is decomposed through the SVD to diagonalize a transformed channel matrix, and a process of solving for the matrix $U_k$ and the matrix $V_k$ is implemented by solving for eigenvectors of a covariance matrix $R_{HH}^1$ and a covariance matrix $R_{HH}^2$. $R_{HH}^1$ is shown in Formula 1.12, and $R_{HH}^2$ is shown in Formula 1.13. Currently, a method for solving for the matrix $V_k$ is to first solve for the covariance matrix, and then perform eigenvalue decomposition on the covariance matrix, so as to obtain each orthogonal vector, that is, each column vector, in the matrix $V_k$.

$$R_{HH}^1 = H_{eff,k}^H H_{eff,k} = \mathbf{V}_k \Sigma_k U_k^H U_k \Sigma_k \mathbf{V}_k^H = \mathbf{V}_k \mathbf{\Delta} \mathbf{V}_k^H \qquad 1.12$$

$$R_{HH}^2 = H_{eff,k} H_{eff,k}^H = U_k \Sigma_k \mathbf{V}_k^H \mathbf{V}_k \Sigma_k U_k^H = U_k \mathbf{\Delta} U_k^H \qquad 1.13$$

$R_{HH}^1$ in Formula 1.12 and $R_{HH}^2$ in Formula 1.13 are both covariance matrices of the channel matrix $H_{eff,k}$.

According to a principle formula $H_{eff,k}=U_k\Sigma_k V_k^H$ of the SVD decomposition, a relationship between the matrix $R_{HH}^1$ and the matrix $V_k$ may be obtained after Formula 1.12 is simplified. Each column vector in the matrix $V_k$ is essentially an eigenvector of $R_{HH}^1$. Therefore, the matrix $V_k$ may be obtained by performing eigenvalue decomposition on $R_{HH}^1$. Similarly, the matrix $U_k$ may be obtained by performing eigenvalue decomposition on $R_{HH}^2$. A channel matrix that is obtained by transforming the matrix $V_k$ and the matrix $U_k$ may implement diagnolization.

The channel matrix $H_{eff,k}$ includes phase information that is used to extract attribute information (for example, a target distance, a target angle, and a target Doppler shift) of the target object. For ease of understanding, $H_{eff,k}$ is represented in a form of Formula 1.14, where $e^{j\varphi}$ is phase information that is included in $H_{eef,k}$ and that represents a delay and a Doppler shift, and a matrix $\tilde{H}_k$ is equivalent to a remaining part of the matrix $H_{eef,k}$ after the phase information $e^{j\varphi}$ that represents the delay and the Doppler shift is extracted from the matrix $H_{eff,k}$.

$$H_{eff,k} = e^{j\varphi}\tilde{H}_k \qquad\qquad 1.14$$

In the case of a single target, to be specific, if there is one target object, when the covariance matrix is solved for the channel matrix in the form shown in formula 1.14, the phase information $e^{j\varphi}$ of the delay and the Doppler shift is cancelled. However, in a case of a plurality of targets, to be specific, in a case in which there are a plurality of target objects, a pairwise product between the plurality of targets may be generated. Therefore, a matrix $V_k$ and a matrix $U_k$ that are solved by using Formula 1.12 and Formula 1.13 may satisfy Formula 1.15, that is, do not satisfy the equation 1.1 of the SVD decomposition.

$$H_{eff,k} \neq U_k\Sigma_k V_k^H \qquad\qquad 1.15$$

However, the matrix $V_k$ and the matrix $U_k$ that are solved by using Formula 1.12 and Formula 1.13 may satisfy a beamforming requirement. As shown in Formula 1.16, after the channel matrix $H_{eff,k}$ is precoded at the transmit end and is beamformed at the receive end, that is, after the channel matrix $H_{eff,k}$ is obtained by transforming the matrix $V_k$ and the matrix $U_k$ that are solved by using the foregoing method, a diagonal matrix $\Lambda_k$ may also be obtained. However, a difference between the matrix $\Lambda_k$ and the matrix $\Sigma_k$ is that all elements on a diagonal line of the matrix $\Sigma_k$ are real numbers and an element on a diagonal line of the matrix $\Lambda_k$ is a complex number including a phase.

$$U_k^H H_{eff,k} V_k = \Lambda_k \qquad\qquad 1.16$$

In the foregoing description, the $k^{th}$ subcarrier is used as an example. It should be noted that a method for solving for a matrix $V$ corresponding to any subcarrier is the same as a method for solving for the matrix $V_k$ corresponding to the $k^{th}$ subcarrier.

Therefore, how to increase phase information included in the CSI feedback matrix $V$, that is, an amount of valid information to help the transmit end extract the attribute information of the target object from a reconstructed CSI feedback matrix $V$ and improve a perception capability of the target object is an urgent problem to be resolved.

The technical solutions provided in embodiments of this application may be used to resolve the foregoing technical problems. The technical solutions may be applied to various communication systems, for example, related standards (for example, 802.11n, 802.11ac, 802.11ax, and 802.11be) of mainstream low frequency bands (for example, 2.4 GHz and 5 GHz) and related standards (for example, 802.11ad/directional multi-gigabit (directional multi-gigabit, DMG), 802.11ay/enhanced directional multi-gigabit (enhanced directional multi-gigabit, EDMG)) of high frequency bands (for example, 60 GHz) in existing institute of electrical and electronics engineers (institute of electrical and electronics engineers, IEEE) 802.11 series standards, and may be applied to a future WLAN standard.

The technical solutions in this application may be further applied to a cellular communication system, for example, a fourth generation (4th generation, 4G) communication system or a fifth generation (5th generation, 5G) communication system.

Scenarios to which the technical solutions of this application are applicable include: a scenario of communication between a first device and a second device, a scenario of communication between first devices, and a scenario of communication between second devices. The technical solutions of this application are mainly described from a perspective of the scenario of the communication between the first device and the second device. For technical solutions in another scenario, refer to the scenario of the communication between the first device and the second device.

For example, FIG. 2 is a schematic diagram of an architecture of a communication system to which a communication method is applicable according to an embodiment of this application. The communication system includes a second device and at least one first device.

Optionally, the second device may be a device that is located on a network side of the communication system and that has a wireless transceiver function, or a chip or a chip system that may be disposed in the device. The first device in this embodiment of this application is an apparatus that provides a service for the second device, and may be an access point (access point, AP). For example, the second device may be a communication entity such as a communication server, a router, a switch, or a bridge, or the second device may include a macro base station, a micro base station, a relay station, or the like in various forms. Certainly, the second device may alternatively be a chip and a processing system in these various forms of devices, to implement the method and functions in this embodiment of this application. In addition, with continuous evolution of application scenarios of a wireless local area network, the second device may be further used in more scenarios such as a sensor node (for example, a smart water meter, a smart electricity meter, and a smart air detection node) in a smart city, a smart device (for example, a smart camera, a projector, a display screen, a television, a speaker, a refrigerator, and a washing machine) in a smart home, a node in an internet of things, an entertainment terminal (for example, a wearable device such as an AR device or a VR device), a smart device (for example, a printer or a projector) in a smart office, an internet of vehicles device in an internet of vehicles, and some infrastructures (for example, a vending machine, a self-service navigation station in a supermarket, a self-service cash register, or a self-service ordering machine) in a daily life scenario.

For example, the first device is an apparatus that has a wireless communication function. The apparatus may be a device of an entire machine, or may be a chip or a processing system that is installed in the device of the entire machine, or the like. The device on which the chip or the processing system is installed may be controlled by the chip or the processing system, to implement the method and functions in this embodiment of this application. For example, the first device in this embodiment of this application has the wireless transceiver function, may be a station (station, STA), and may communicate with the second device or another device. For example, the first device is any user communication device that allows a user to communicate with the second device and further communicate with a WLAN. For example, the first device may be user equipment that can be connected to a network, such as a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, or may be an internet of things node in the internet of things, a smart device, a vehicle-mounted communication apparatus in the internet of vehicles, or the like. The first device may alternatively be a chip and a processing system in the foregoing terminals. Specific forms of the first device and the second device are not specially limited in this embodiment of this application, and are merely described as examples herein.

Optionally, the first device may be the device that is located on the network side of the communication system and that has the wireless transceiver function, or the chip or the chip system that may be disposed in the device. The second device is the apparatus that has the wireless communication function. The apparatus may be the device of the entire machine, or may be the chip or the processing system that is installed in the device of the entire machine, or the like. The device on which the chip or the processing system is installed may be controlled by the chip or the processing system, to implement the method and functions in this embodiment of this application. This is not limited in this application.

It should be noted that the communication method provided in this embodiment of this application is applicable to the first device and the second device shown in FIG. 2. For specific implementation, refer to the following method embodiment. Details are not described herein again.

It should be noted that the solutions in embodiments of this application may be further applied to another communication system, and a corresponding name may alternatively be replaced with a name of a corresponding function in the another communication system.

It should be understood that FIG. 2 is merely a simplified schematic diagram that is used as an example for ease of understanding. The communication system may further include another device that is not drawn in FIG. 2.

Before the method provided in this embodiment of this application is described, a simulation analysis process of the communication method provided in this embodiment of this application is first described.

For example, a channel response $H_{eff,k,i}$ caused by parameters such as a target distance, a target angle, and a target Doppler shift of a target object may be represented as Formula 1.17, and the channel response is a channel matrix.

$$H_{eff,k,i} = \sum_{l=1}^{L} \underbrace{\exp\left(-\mathrm{j}2\pi k\Delta f\tau_l\right)\exp\left(\mathrm{j}2\pi f_{dl}i\Delta t\right)}_{\text{Linear phases corresponding to a distance and a Doppler shift}} \cdot \tilde{H}_l \qquad 1.17$$

In Formula 1.17, k represents a $k^{th}$ subcarrier, and $i$ represents an $i^{th}$ pulse, that is, an $i^{th}$ NDP. One NDP corresponds to one channel matrix $H$, the NDP may be transmitted (including sent and received) by using a plurality of subcarriers, and the channel matrix $H$ corresponding to the NDP may include channel information of the plurality of subcarriers, that is, one matrix $H$ may include a plurality of $H_{eff}$. $L$ represents a quantity of target objects, $\tau_l$ represents a delay corresponding to an $l^{th}$ target object, and $f_{dl}$ represents a Doppler frequency corresponding to an $l^{th}$ target. $\tilde{H}_l$ is a MIMO channel matrix corresponding to the $l^{th}$ target object, where $\tilde{H}_l$ may be represented in a form shown in Formula 1.18.

$$\tilde{H}_l = \underbrace{\exp\left[-j2\pi d \sin\theta_{tl}\cdot(1:N_t)/\lambda\right]\otimes\exp\left[-j2\pi d \sin\theta_{rl}\cdot(1:N_r)/\lambda\right]}_{\text{Two-dimensional steering vectors obtained by using an angle of departure and an angle of arrival}} \qquad 1.18$$

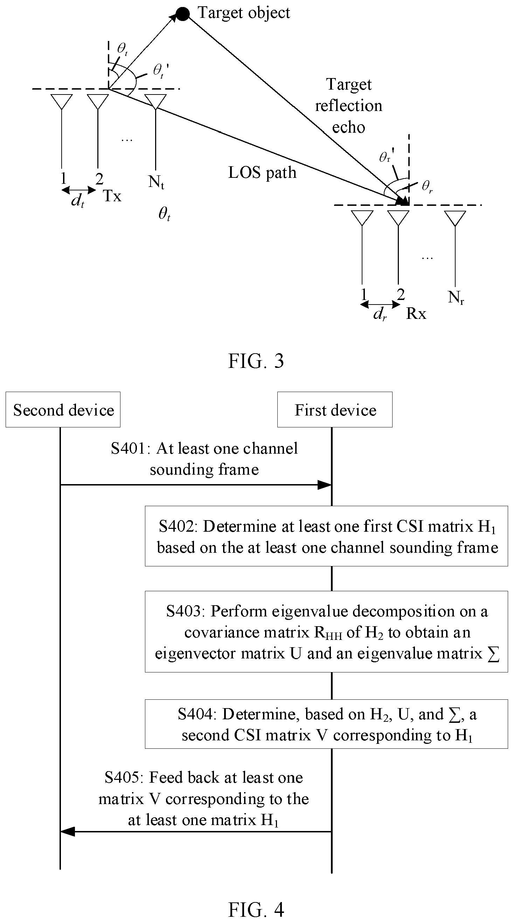

In Formula 1.18, d is a spacing between antennas, $\theta_{tl}$ is an angle of departure (angle of departure, AOD) corresponding to the $l^{th}$ target object, $\theta_{rl}$ is an angle of arrival (angle of arrival, AOA) corresponding to the $l^{th}$ target object, $N_t$ is a quantity of transmitting antennas, $N_r$ is a quantity of receiving antennas, and $\lambda$ is a carrier frequency wavelength.
For example, as shown in FIG. 3, $\theta_t$ is an angle of departure corresponding to the target object, $\theta_r$ is an angle of arrival corresponding to the target object, Tx is a transmitting antenna, Rx is a receiving antenna, $d_t$ is a distance between two transmitting antennas, and $d_r$ is a distance between two receiving antennas.
If a CSI feedback matrix $V$ is directly calculated by using a channel matrix $H_{eff,k}$ according to the foregoing solution, phase information corresponding to the target distance and the target Doppler shift is canceled. The following uses an example in which a transmit end and a receive end include a line of sight (line of sight, LOS) path and a target reflection echo. The target reflection echo may also be referred to as a target reflection path.
For example, as shown in FIG. 3, the LOS path is a path of a channel directly from the transmit end to the receive end, and the target reflection echo is a path of the channel from the transmit end to the target object and then to the receive end.
A covariance matrix $R_{HH}$ of the channel matrix $H_{eff,k,i}$ may be represented by Formula 1.19.

$$R_{HH} = H_{eff,k,i}^{H}\cdot H_{eff,k,i} = R_{los} + R_{targ} + R_{los-targ} + R_{targ-los} \qquad 1.19$$

In Formula 1.19, $H_{eff,k,i}^{H}$ is a conjugate transpose of $H_{eff,k,i}$, and a matrix $R_{los}$, a matrix $R_{targ}$, a matrix $R_{los-targ}$, and a matrix $R_{targ-los}$ may be respectively represented in forms shown in Formula 1.20, Formula 1.21, Formula 1.22, and Formula 1.23.

$$R_{los} = \tilde{H}_{los}^{H}\tilde{H}_{los} \qquad 1.20$$

In Formula 1.20, $\tilde{H}_{los}$ represents a MIMO channel matrix corresponding to the LOS path, and $\tilde{H}_{los}^{H}$ is a conjugate transpose of $\tilde{H}_{los}$.

$$R_{targ} = \tilde{H}_{targ}^{H}\tilde{H}_{targ} \qquad 1.21$$

In Formula 1.21, $\tilde{H}_{targ}$ represents a MIMO channel matrix corresponding to the target reflection echo, and $\tilde{H}_{targ}^{H}$ is a conjugate transpose of $\tilde{H}_{targ}$.

$$R_{los-targ} = \exp\left[j2\pi k\Delta f\left(\tau_{targ}-\tau_{los}\right)\right]\exp\left[-j2\pi\left(f_{dtarg}-f_{dlos}\right)i\Delta t\right]\tilde{H}_{targ}^{H}\tilde{H}_{los} \qquad 1.22$$

$$R_{targ-los} = \exp\left[j2\pi k\Delta f\left(\tau_{los}-\tau_{targ}\right)\right]\exp\left[-j2\pi\left(f_{dlos}-f_{dtarg}\right)i\Delta t\right]\tilde{H}_{los}^{H}\tilde{H}_{targ} \qquad 1.23$$

EP 4 380 219 A1

In Formula 1.22 and Formula 1.23, $\tau_{targ}$ represents a delay corresponding to the target reflection echo, $\tau_{los}$ represents a delay corresponding to the LOS path, $f_{dtarg}$ represents a Doppler frequency corresponding to the target reflection echo, and $f_{dlos}$ represents a Doppler frequency corresponding to the LOS path.

Assuming that energy of the LOS path is far greater than energy of the target reflection echo, the foregoing $R_{los}$ has maximum energy, and $R_{los}$ does not include a linear phase on any subcarrier, that is, there is no phase information that is used to determine attribute information of the target object. Therefore, delay information (for example, $\tau_l$) and the Doppler frequency (for example, $f_{dl}$) in the foregoing formulas cannot be effectively extracted directly from dimensions of different subcarriers or different pulses.

Based on the foregoing analysis, this embodiment of this application provides a communication method, to keep the phase information that is in the CSI feedback matrix $V$ and that is used to extract the attribute information of the target object, and improve a target perception capability. The method includes: The receive end determines, based on a channel sounding frame received from the transmit end, a CSI matrix $H_2$ corresponding to each subcarrier, performs eigenvalue decomposition on a covariance matrix $R_{HH}$ of $H_2$ to obtain an eigenvector matrix $U$ and an eigenvalue matrix $\Sigma$, and then determines $V$ based on the matrix $U$ and the matrix $\Sigma$. In this way, the matrix $V$ obtained through solving includes the phase information. Therefore, after the receive end feeds back the matrix $V$ to the transmit end, the transmit end can extract the attribute information of the target object from a reconstructed matrix $V$.

The following describes in detail the communication method provided in this embodiment of this application with reference to the accompanying drawings.

For example, FIG. 4 is a schematic flowchart of a communication method according to an embodiment of this application. The communication method is applicable to communication between a first device and a second device shown in FIG. 4. As shown in FIG. 4, the communication method includes the following steps.

S401: The second device sends at least one channel sounding frame to the first device. Correspondingly, the first device receives the at least one channel sounding frame from the second device.

For example, the channel sounding frame may be an NDP frame, and the channel sounding frame may be used for channel measurement. The second device may send the channel sounding frame to the first device in a broadcast manner. Optionally, after the first device receives the channel sounding frame, a cyclic shift delay (cyclic shift delay, CSD) on each space-time stream (that is, the channel sounding frame) is removed first, and then a subsequent step is performed.

S402: The first device determines at least one first CSI matrix $H_1$ based on the at least one channel sounding frame.

$H_1$ indicates a channel state, and $H_1$ is a channel matrix $H$ described above. The channel sounding frame is in a one-to-one correspondence with $H_1$. The one-to-one correspondence means that the first device may determine, based on each received channel sounding frame, $H_1$ corresponding to each channel sounding frame. Each channel sounding frame herein belongs to the at least one channel sounding frame.

For example, the first device may determine a first CSI matrix $H_1^i$ based on a received $i^{th}$ channel sounding frame, where i is a positive integer, and the $i^{th}$ channel sounding frame belongs to the at least one channel sounding frame. The first device may further determine a first CSI matrix $H_1^{i+1}$ based on an $(i+1)^{th}$ channel sounding frame, and the $(i+1)^{th}$ channel sounding frame also belongs to the at least one channel sounding frame. In this application, the first CSI matrices $H_1^i$, $H_1^{i+1}$, and the like are represented by $H_1$, each $H_1$ corresponds to one channel sounding frame, and each channel sounding frame may be used to determine $H_1$ corresponding to the channel sounding frame. It should be understood that, for different channel sounding frames, specific content of $H_1$ corresponding to the channel sounding frames may be different.

Dimensions of $H_1$ are $N_r \times N_t \times K$, where $N_t$ is a quantity of antennas of the second device, that is, a quantity of transmitting antennas, and $N_r$ is a quantity of antennas of the first device, that is, a quantity of receiving antennas. $K$ is a quantity of subcarriers that carry the channel sounding frame, and $N_t$, $N_r$, and $K$ are all positive integers. It should be noted that one channel sounding frame may be carried on a plurality of subcarriers, and one matrix $H_1$ corresponds to the plurality of subcarriers.

Optionally, the first device may determine, based on all received channel sounding frames, $H_1$ corresponding to each channel sounding frame, or may determine, based on a part of all the received channel sounding frames, $H_1$ corresponding to the part of channel sounding frames. This is not limited in this application.

For example, the first device may obtain $H_1$ through channel estimation.

S403: The first device performs eigenvalue decomposition on a covariance matrix $R_{HH}$ of $H_2$ to obtain an eigenvector matrix $U$ and an eigenvalue matrix $\Sigma$.

$H_2$ may be determined based on $H_1$, $H_2$ is a CSI matrix corresponding to any subcarrier, $H_2$ is $H_{eff}$, dimensions of $H_2$ are $N_r \times N_t$, where $N_t$ is the quantity of antennas of the second device, and $N_r$ is the quantity of antennas of the first device.

It should be understood that one matrix $H_1$ may correspond to the plurality of subcarriers. Therefore, for the plurality of subcarriers corresponding to $H_1$, $H_2$ corresponding to any subcarrier may be determined based on $H_1$. Therefore, one matrix $H_1$ may correspond to a plurality of matrices $H_2$, where "correspond" may alternatively be described as "include" herein.

For example, $H_1$ includes four subcarriers. To be specific, in a case in which the dimensions of $H_1$ are $N_t \times N_r \times K$, where a value of $K$ is 4. For the four subcarriers, each subcarrier corresponds to one matrix $H_2$. For example, a first subcarrier corresponds to $H_2^1$, and a third subcarrier corresponds to $H_2^3$. $H_2^1$ and $H_2^3$ may be determined based on a same $H_1$. In this application, $H_2^1$, $H_2^3$, and the like are represented by $H_2$. It should be understood that, for different subcarriers, specific content of $H_2$ corresponding to the subcarriers may alternatively be different.

Optionally, $R_{HH}$ satisfies: $R_{HH} = H_2 H_2^H$ , and $H_2^H$ is a conjugate transpose of $H_2$.

Optionally, in a process of performing eigendecomposition on $R_{HH}$ and calculating the matrix $U$, a condition for obtaining column vectors in $U$ includes: assigning b to an $a^{th}$ element in each column vector in $U$, where a is a positive integer, and b is a real number. It should be understood that, for each column vector in $U$, the condition needs to be satisfied. The column vectors herein are the eigenvectors. The following describes the process of performing eigendecomposition on $R_{HH}$ in detail by using an example.

For example, it is assumed that the matrix $H_2$ is a $2 \times 2$ matrix, and the covariance matrix $R_{HH}$ of the matrix may be represented in a form of Formula 1.24.

$$R_{HH} = H_2 H_2^H = \begin{bmatrix} C_1 & C_3 \\ C_2 & C_4 \end{bmatrix} \qquad 1.24$$

Eigenvalue decomposition is performed on the covariance matrix $R_{HH}$. Based on knowledge of linear algebra, an eigenvalue of the covariance matrix $R_{HH}$ may be represented in a form shown in Formula 1.25.

$$RU = \lambda U \qquad 1.25$$

In Formula 1.25, $U$ is a column vector matrix of the covariance matrix $R_{HH}$, and $\lambda$ is an eigenvalue corresponding to the eigenvector matrix $U$.

Because $H_2$ is the $2 \times 2$ matrix, correspondingly, $U$ includes two column vectors: $U_1$ and $U_2$, and $U$ is represented in a form of Formula 1.26.

$$U = \begin{bmatrix} U_1 & U_2 \end{bmatrix}$$
$$= \begin{bmatrix} u_1 & u_3 \\ u_2 & u_4 \end{bmatrix} \qquad 1.26$$

In Formula 1.26, $u_1$ and $u_2$ may be referred to as elements in $U_1$, and $u_3$ and $u_4$ may be referred to as elements in $U_2$. Usually, when the column vectors are calculated, for ease of calculation, after a relational expression between $u_1$ and $u_2$ is obtained, one element of $u_1$ and $u_2$ is usually used as a reference item, and a constant 1 is assigned to the element, to obtain another element and further obtain $U_1$. $U_2$ is solved in a similar way. For example, $u_2 = u_4 = 1$, so that $U_1$ and $U_2$ may be obtained, as shown in Formula 1.27.

$$U_1 = \begin{bmatrix} \dfrac{\lambda_1 - C_4}{C_2} \\ 1 \end{bmatrix} \, or \, \begin{bmatrix} \dfrac{C_2^*}{\lambda_1 - C_1} \\ 1 \end{bmatrix}$$

$$U_2 = \begin{bmatrix} \dfrac{\lambda_2 - C_4}{C_2} \\ 1 \end{bmatrix} \, or \, \begin{bmatrix} \dfrac{C_2^*}{\lambda_2 - C_1} \\ 1 \end{bmatrix}$$

1.27

In Formula 1.27, $C_2^*$ is a conjugate of $C_2$. For example, for solving for $U_1$, no matter which element is taken as the reference item, a relationship between $u_1$ and $u_2$ is essentially not changed, and for solving for $U_2$, no matter which element is taken as the reference item, a relationship between $u_3$ and $u_4$ is essentially not changed. Only a corresponding numerical solution is changed proportionally. Therefore, for $U$ that is finally obtained and $V$ that is obtained through solving based on $U$ and $\Sigma$, they always satisfy Formula 1.28.

$$H_2 = U \Sigma V^H$$

1.28

Therefore, for the CSI matrix $H_2$ corresponding to one subcarrier, in an SVD decomposition process, when the column vectors of the matrix $U$ are solved, a reference item that is used does not affect the decomposition, and a matrix obtained through decomposition may satisfy the foregoing Formula 1.28.

However, because delay information is carried on the plurality of subcarriers of the channel sounding frame, and Doppler information is carried on a plurality of channel sounding frames, it should be understood that the delay information and the Doppler information herein are phase information.

Therefore, to ensure that the delay information and the Doppler information are kept correctly, for a case in which SVD decomposition is performed on CSI matrices $H_2$ corresponding to different subcarriers in different channel sounding frames, when the column vectors in $U$ are calculated, elements at a same location need to be selected as reference items. For example, it is assumed that an $a^{th}$ element in a first column vector in the matrix $U$ is used as the reference item, an $a^{th}$ element should also be selected as the reference item for another column vector. In addition, a same value needs to be assigned to these reference items. For example, a first element of all column vectors in $U$ may be used as the reference item, and a value 1 is assigned to the first element, to solve for the column vectors in $U$.

S404: The first device determines, based on $H_2$, $U$, and $\Sigma$, a second CSI matrix $V$ corresponding to $H_1$.

$H_2$ and $V$ are in a one-to-one correspondence. Because $H_1$ may correspond to the plurality of matrices $H_2$, $H_1$ may correspond to the plurality of matrices $V$.

Optionally, a column vector $u_s$ in $U$ and a column vector $v_s$ in $V$ satisfy the following condition: $v_s = \dfrac{H_2^H u_s}{\sigma_s}$.

$\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

Because $\Sigma$ is a real matrix, $\sigma_s$ is used as the arithmetic square root of the corresponding eigenvalue in $\Sigma$, $\sigma_s$ does not include the phase information, and the matrix $U$ includes a part of the phase information (for example, in a case in which there is only one target object, the matrix $U$ includes phase information that is used to extract a target angle. In a case in which there are a plurality of target objects or a plurality of paths, the matrix $U$ includes the phase information that is used to extract the target angle, and information about pairwise product between the plurality of target objects or between the plurality of paths). Correspondingly, the column vector $u_s$ in the matrix $U$ also includes a part of the phase information, and $H_2$ includes original phase information. Therefore, related phase information is correspondingly kept in $v_s$, and correspondingly, the related phase information is also kept in the matrix $V$, and the phase information may be used to subsequently extract the attribute information of the target object.

S405: The first device feeds back, to the second device, at least one matrix $V$ corresponding to the at least one matrix $H_1$. Correspondingly, the second device receives the at least one matrix $V$ that corresponds to the at least one matrix $H_1$ and that is fed back by the first device.

The at least one matrix $V$ is used to determine the attribute information of the target object. $V$ is an orthogonal matrix. Optionally, one column vector in $V$ corresponds to one target object. Optionally, the matrix $V$ may be further used for MIMO precoding (precoding), to achieve an objective of channel diagonalization, and improve communication performance.

Optionally, the attribute information of the target object may include a target distance. The target distance is a sum of a distance between the target object and the first device and a distance between the target object and the second device. For example, the target distance is a distance of a target reflection echo shown in FIG. 3. Specifically, because the delay information needs to be determined based on at least two subcarriers in the channel sounding frame, the target distance may be determined based on at least two matrices $V$ corresponding to one matrix $H_1$, that is, determined based on $V$ corresponding to the at least two subcarriers in the channel sounding frame.

Optionally, the attribute information of the target object may further include the target angle, and the target angle includes a transmit angle between the second device and the target object, for example, $\theta_t$ shown in FIG. 3. The target angle may be determined based on $V$ corresponding to any subcarrier.

Optionally, the attribute information of the target object may further include a target Doppler shift, and the target Doppler shift is a difference between a frequency at which the first device receives the channel sounding frame through the target object and a frequency at which the second device sends the channel sounding frame. For example, as shown in FIG. 3, the target Doppler shift is a difference between a receiving frequency of a receive end and a sending frequency of the transmit end when the channel sounding frame is transmitted by using the target reflection echo. The target Doppler shift may be determined by $V$ corresponding to same subcarriers in at least two channel sounding frames, and the same subcarriers is subcarriers with a same frequency. For example, it is assumed that there are two channel sounding frames, and $V$ corresponding to a $k^{th}$ subcarrier in one channel sounding frame is selected, or $V$ corresponding to a $k^{th}$ subcarrier in the other channel sounding frame may alternatively be selected, and then the target Doppler shift is determined based on the two matrices $V$.

Optionally, the first device may alternatively compress the matrix $V$ into a series of angle values by using a givens rotation, and then feed back a compressed angle value to the second device.

Based on the foregoing technical solution, an amount of valid information in a CSI feedback matrix may be kept, so that the attribute information of the target object is extracted, and a perception capability of the target object is improved.

Optionally, before step S405 shown in FIG. 4, the method further includes the following steps (not shown in the figure).

S406: The second device sends at least one trigger frame to the first device. Correspondingly, the first device receives the at least one trigger frame from the second device.

The trigger frame indicates the first device to determine $V$ based on $H_2$, $U$, and $\Sigma$. The trigger frame may have another name. This is not limited in this application. Optionally, this step may be performed before step S404, or may be performed after step S401. This is not specifically limited in this application.

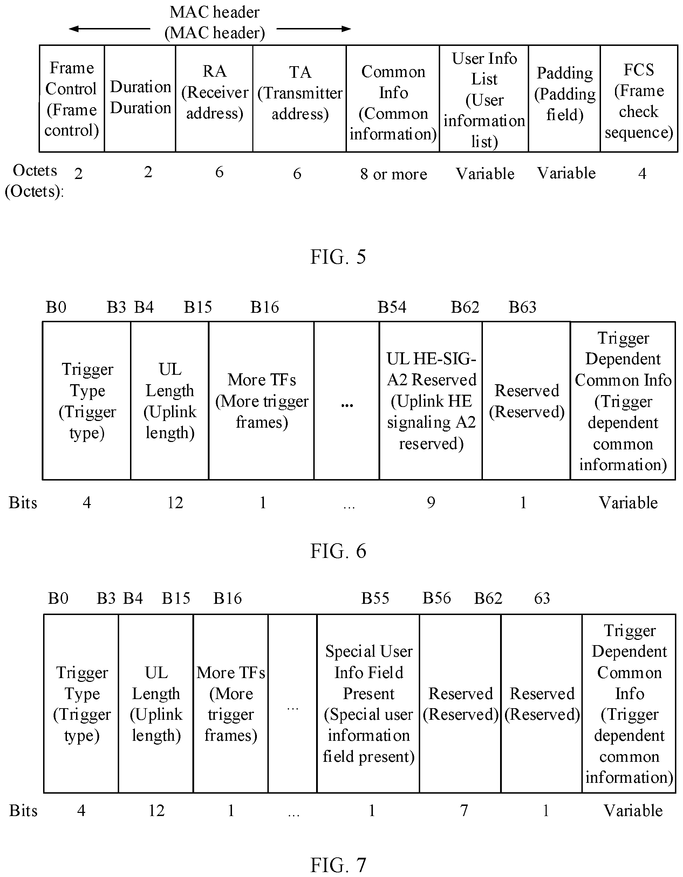

For example, FIG. 5 shows a frame format of the trigger frame according to an embodiment of this application. In 802.11ax, a specific structure of a Common Info field of the frame format is shown in FIG. 6. In 802.11be, a specific structure of the Common Info field of the frame format is shown in FIG. 7.

For example, in this embodiment of this application, content shown in Table 1 may be used to indicate that the trigger frame is a sensing beamforming report poll, to further indicate a first device to determine $V$ based on $H_2$, $U$, and $\Sigma$.

In a possible implementation, a reserved value, for example, any one or more values from 8 to 15, in a trigger type field may be used for indication. For example, as shown in Table 1, when a Trigger type in a field shown in FIG. 6 or FIG. 7 is 8, it indicates that the trigger frame is a trigger frame of the sensing beamforming report poll, in other words, the trigger frame indicates the first device to determine $V$ based on $H_2$, $U$, and $\Sigma$. For example, the Trigger type may alternatively be another reserved value, for example, a value from 9 to 15, to indicate that the trigger frame is the trigger frame for the sensing beamforming report poll. This is not specifically limited in this application.

In another possible implementation, a used value, for example, any one or more values from 0 to 7, in the trigger type field may be used for indication. For example, as shown in Table 1, a value 1 may be used for indication, and when a current Trigger type is 1, a corresponding beamforming report poll is modified to the sensing beamforming report poll, to indicate that the trigger frame is the trigger frame of the sensing beamforming report poll, in other words, the trigger frame indicates the first device to determine $V$ based on $H_2$, $U$, and $\Sigma$.

**Table 1**

| Trigger type field value (Trigger type subfield value) | Trigger frame variant (Trigger frame variant) |
|---|---|
| 0 | Basic (basic) |
| 1 | Beamforming report poll (Beamforming report poll) |
| ... | ... |

(continued)

| Trigger type field value (Trigger type subfield value) | Trigger frame variant (Trigger frame variant) |
|---|---|
| 7 | Null data packet feedback report poll (NDP feedback report poll) |
| 8 | Sensing beamforming report poll (Sensing beamforming report poll) |
| 9-15 | Reserved |

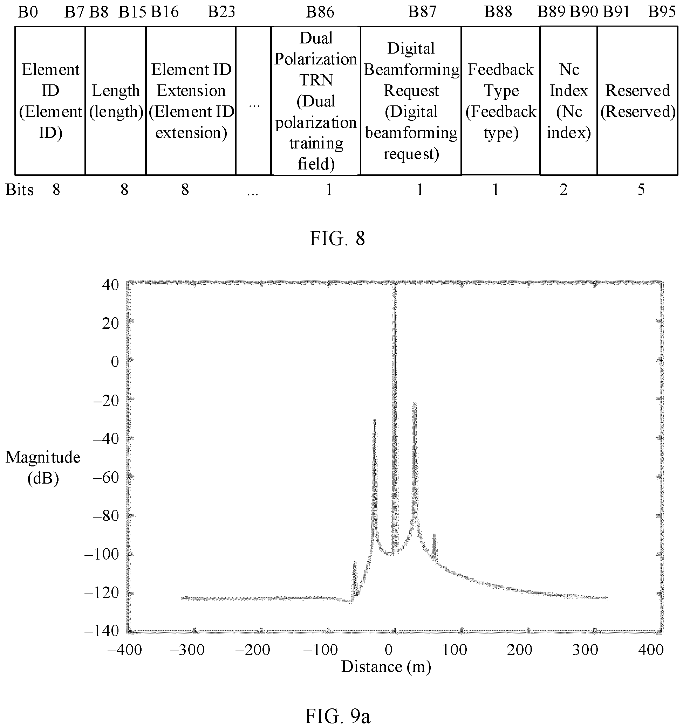

For example, FIG. 8 shows a frame format of another trigger frame according to an embodiment of this application. The trigger frame may also be referred to as a beam refinement protocol (beam refinement protocol, BRP) request (request) frame.

When a Feedback Type field is 0, it indicates that a current scenario is a multi-user (multi user, MU) scenario. In this embodiment of this application, when the Feedback Type field is 1, that a bit position is 1 may indicate that the trigger frame is the sensing beamforming report poll, in other words, the trigger frame indicates a first device to determine $V$ based on $H_2$, $U$, and $\Sigma$.

In a possible implementation, a reserved field may be used for indication. For example, as shown in Table 2, a B91 field may be used for indication. When the B91 field is 1, the B91 field indicates the first device to determine $V$ based on $H_2$, $U$, and $\Sigma$. When the B91 field is 0, the B91 field is the reserved field. Alternatively, another reserved field, for example, any one or more fields from B92 to B95, may be used for indication.

In another possible implementation, a field that has currently been used may alternatively be modified for indication. For example, a B87 field may be modified, to indicate the first device to determine $V$ based on $H_2$, $U$, and $\Sigma$. Optionally, another field that has been used may be modified. This is not limited in this application.

It should be noted that the sensing beamforming report poll is merely a name, and is not intended to limit a function of the sensing beamforming report poll. There may be another name. This is not limited in this application.

**Table 2**

| B91 bit value | Meaning |
|---|---|
| 1 | Sensing beamforming report poll |
| 0 | Reserved |

The foregoing mainly describes in detail how to determine the matrix $V$. The following specifically describes a method in which the first device feeds back the matrix $V$ to the second device. For example, the first device may feed back the matrix $V$ to the second device in the following manner.

Manner 1: A noncompressed beamforming report (noncompressed beamforming report) is used. In this manner, a first device may perform quantization and coding on a CSI feedback matrix $V$ on each subcarrier sequentially in an order between a real part and an imaginary part, and then form a data frame based on a frame structure of the data frame shown in Table 3 or Table 4, and feed back the data frame to a second device. Table 3 shows the frame structure of the data frame in a case in which a signal bandwidth is 20 MHz, and Table 4 shows the frame structure of the data frame in a case in which the signal bandwidth is 40 MHz. It should be noted that Manner 1 exists in an existing standard 802.11n, but does not exist in 802.11ac and a subsequent standard.

**Table 3**

| Field (Field) | Size (Size) (bits (bits)) | Meaning (Meaning) |
|---|---|---|
| Signal-to-noise ratio of space-time stream 1 (SNR for space-time stream 1) | 8 | Average signal-to-noise ratio that is reported by the space-time stream 1 and that is sent by an STA (Average signal-to-noise ratio in the STA sending the report for space-time stream 1) |
| ... | | |

(continued)

| Field (Field) | Size (Size) (bits (bits)) | Meaning (Meaning) |
|---|---|---|
| Signal-to-noise ratio of a space-time stream $N_c$ (SNR for space-time stream $N_c$) | 8 | Average signal-to-noise ratio that is reported by the space-time stream $N_c$ and that is sent by the STA (Average signal-to-noise ratio in the STA sending the report for space-time stream $N_c$) |
| Beamforming feedback matrix of a subcarrier-28 (Beamforming Feedback Matrix for carrier-28) | $2 \times N_b \times N_c \times N_r$ | Beamforming feedback matrix $V$ (Beamforming Feedback Matrix $V$) (see Figure 7-361) |
| ... | | |
| Beamforming feedback matrix of a subcarrier-1 (Beamforming Feedback Matrix for carrier-1) | $2 \times N_b \times N_c \times N_r$ | Beamforming feedback matrix $V$ (Beamforming Feedback Matrix $V$) |
| Beamforming feedback matrix of the subcarrier-1 (Beamforming Feedback Matrix for carrier-1) | $2 \times N_b \times N_c \times N_r$ | Beamforming feedback matrix $V$ (Beamforming Feedback Matrix $V$) |
| ... | | |
| Beamforming feedback matrix of the subcarrier-28 (Beamforming Feedback Matrix for carrier-28) | $2 \times N_b \times N_c \times N_r$ | Beamforming feedback matrix $V$ (Beamforming Feedback Matrix $V$) |

For example, as shown in Table 3, the CSI feedback matrix $V$ corresponding to the subcarrier (for example, the subcarrier-28 or the subcarrier-1) may be quantized and encoded into $2 \times N_b \times N_c \times N_r$ bits.

**Table 4**

| Field (Field) | Size (bits) | Meaning (Meaning) |
|---|---|---|
| Signal-to-noise ratio of space-time stream 1 (SNR for space-time stream 1) | 8 | Average signal-to-noise ratio that is reported by the space-time stream 1 and that is sent by the STA (Average signal-to-noise ratio in the STA sending the report for space-time stream 1) |
| ... | | |
| Signal-to-noise ratio of the space-time stream $N_c$ (SNR for space-time stream $N_c$) | 8 | Average signal-to-noise ratio that is reported by the space-time stream $N_c$ and that is sent by the STA (Average signal-to-noise ratio in the STA sending the report for space-time stream $N_c$) |
| Beamforming feedback matrix of a subcarrier-58 (Beamforming Feedback Matrix for carrier-58) | $2 \times N_b \times N_c \times N_r$ | Beamforming feedback matrix $V$ (Beamforming Feedback Matrix $V$) (see Figure 7-361) |
| ... | | |
| Beamforming feedback matrix of a subcarrier-2 (Beamforming Feedback Matrix for carrier-2) | $2 \times N_b \times N_c \times N_r$ | Beamforming feedback matrix $V$ (Beamforming Feedback Matrix $V$) |
| Beamforming feedback matrix of the subcarrier-2 (Beamforming Feedback Matrix for carrier-2) | $2 \times N_b \times N_c \times N_r$ | Beamforming feedback matrix $V$ (Beamforming Feedback Matrix $V$) |
| ... | | |

(continued)

| Field (Field) | Size (bits) | Meaning (Meaning) |
|---|---|---|
| Beamforming feedback matrix of a subcarrier-58 (Beamforming Feedback Matrix for carrier-58) | $2 \times N_b \times N_c \times N_r$ | Beamforming feedback matrix $V$ (Beamforming Feedback Matrix $V$) |

For example, as shown in Table 4, the CSI feedback matrix $V$ corresponding to the subcarrier (for example, the subcarrier-58 or the subcarrier-2) may be quantized and encoded into $2 \times N_b \times N_c \times N_r$ bits.

Manner 2: A compressed beamforming report (compressed beamforming report) is used. In this manner, the first device compresses the CSI feedback matrix $V$ into a series of angle values. For example, $V$ is compressed into the series of angle values by using the formula shown in Formula 1.8. The series of angle values include an angle value $\phi$ and an angle value $\psi$. Then, quantization and coding are performed on $\phi$ and $\psi$ based on Table 5, and finally a data frame is formed based on a frame structure of the data frame shown in Table 6 or Table 7, and the data frame is fed back to the second device. Table 6 shows the frame structure of the data frame in a case in which the signal bandwidth is 20 MHz, and Table 7 shows the frame structure of the data frame in a case in which the signal bandwidth is 40 MHz. For example, Manner 2 exists in both current standards 802.11ax and 802.11be.

**Table 5**

| Quantized (Quantized) $\psi$ | Quantized $\phi$ |
|---|---|
| $$\psi = \frac{k\pi}{2^{b_\psi+1}} + \frac{\pi}{2^{b_\psi+2}} \quad \text{radians (radians)}$$ <br> where <br> k = 0, 1, ..., $2^{b_\psi}$-1. <br> $b_\psi$ is a quantity of bits used to quantize $\psi$ ($b_\psi$ is the number of bits used to quantize $\psi$) (defined by the Codebook Information field of the MIMO Control field; see 7.3.1.26). | $$\phi = \frac{k\pi}{2^{b_\phi-1}} + \frac{\pi}{2^{b_\phi}} \quad \text{radians (radians)}$$ <br> where <br> k = 0, 1, ..., $2^{b_\phi}$-1. <br> $b_\phi$ is the number of bits used to quantize $\phi$ (defined by the Codebook Information field of the MIMO Control field; see 7.3.1.26). |

For example, as shown in Table 5, $b_\psi$ may be used to quantize the angle value $\psi$, and $b_\phi$ may be used to quantize the angle value $\phi$.

**Table 6**

| Field (Field) | Size (bits) | Meaning (Meaning) |
|---|---|---|
| Signal-to-noise ratio of the space-time stream 1 (SNR for space-time stream 1) | 8 | Average signal-to-noise ratio that is reported by the space-time stream 1 and that is sent by the STA (Average signal-to-noise ratio in the STA sending the report for space-time stream 1) |
| ... | | |
| Signal-to-noise ratio of the space-time stream $N_c$ (SNR for space-time stream $N_c$) | 8 | Average signal-to-noise ratio that is reported by the space-time stream $N_c$ and that is sent by the STA (Average signal-to-noise ratio in the STA sending the report for space-time stream $N_c$) |
| Beamforming feedback matrix of the subcarrier-28 (Beamforming Feedback Matrix for carrier-28) | $N_a \times (b_\psi + b_\phi)/2$ | Beamforming feedback matrix $V$ (Beamforming Feedback Matrix $V$) |
| ... | | |
| Beamforming feedback matrix of the subcarrier-1 (Beamforming Feedback Matrix for carrier-1) | $N_a \times (b_\psi + b_\phi)/2$ | Beamforming feedback matrix $V$ (Beamforming Feedback Matrix $V$) |

(continued)

| Field (Field) | Size (bits) | Meaning (Meaning) |
|---|---|---|
| Beamforming feedback matrix of the subcarrier-1 (Beamforming Feedback Matrix for carrier-1) | $N_a \times (b_\psi + b_\phi)/2$ | Beamforming feedback matrix $V$ (Beamforming Feedback Matrix $V$) |
| ... | | |
| Beamforming feedback matrix of the subcarrier-28 (Beamforming Feedback Matrix for carrier-28) | $N_a \times (b_\psi + b_\phi)/2$ | Beamforming feedback matrix $V$ (Beamforming Feedback Matrix $V$) |

For example, as shown in Table 6, the CSI feedback matrix $V$ corresponding to the subcarrier (for example, the subcarrier-28 or the subcarrier-1) may be quantized and encoded into $N_a \times (b_\psi + b_\phi)/2$ bits.

**Table 7**

| Field (Field) | Size (bits) | Meaning |
|---|---|---|
| Signal-to-noise ratio of the space-time stream 1 (SNR for space-time stream 1) | 8 | Average signal-to-noise ratio that is reported by the space-time stream 1 and that is sent by the STA |
| | | (Average signal-to-noise ratio in the STA sending the report for space-time stream 1) |
| ... | | |
| Signal-to-noise ratio of the space-time stream $N_c$ (SNR for space-time stream $N_c$) | 8 | Average signal-to-noise ratio that is reported by the space-time stream $N_c$ and that is sent by the STA (Average signal-to-noise ratio in the STA sending the report for space-time stream $N_c$) |
| Beamforming feedback matrix of the subcarrier-58 (Beamforming Feedback Matrix for carrier-58) | $N_a \times (b_\psi + b_\phi)/2$ | Beamforming feedback matrix $V$ (Beamforming Feedback Matrix $V$) (see Figure 7-361) |
| Beamforming feedback matrix of subcarrier-5 8 + $Ng$ (Beamforming Feedback Matrix for carrier-58 + $Ng$) | $N_a \times (b_\psi + b_\phi)/2$ | Beamforming feedback matrix $V$ (Beamforming Feedback Matrix $V$) |
| ... | | |
| Beamforming feedback matrix of the subcarrier-2 (Beamforming Feedback Matrix for carrier-2) | $N_a \times (b_\psi + b_\phi)/2$ | Beamforming feedback matrix $V$ (Beamforming Feedback Matrix $V$) |
| Beamforming feedback matrix of the subcarrier-2 (Beamforming Feedback Matrix for carrier-2) | $N_a \times (b_\psi + b_\phi)/2$ | Beamforming feedback matrix $V$ (Beamforming Feedback Matrix $V$) |
| Beamforming feedback matrix of subcarrier 2 + $Ng$ (Beamforming Feedback Matrix for carrier 2 + $Ng$) | $N_a \times (b_\psi + b_\phi)/2$ | Beamforming feedback matrix $V$ (Beamforming Feedback Matrix $V$) |
| ... | | |
| Beamforming feedback matrix of the subcarrier-58 (Beamforming Feedback Matrix for carrier-58) | $N_a \times (b_\psi + b_\phi)/2$ | Beamforming feedback matrix $V$ (Beamforming Feedback Matrix $V$) |

For example, as shown in Table 7, the CSI feedback matrix $V$ corresponding to the subcarrier (for example, the subcarrier-58 or the subcarrier-2) may be quantized and encoded into $N_a \times (b_\psi + b_\phi)/2$ bits.

It should be noted that the foregoing related description of the method for which the first device feeds back the matrix $V$ to the second device belongs to a low-frequency scenario, and the following describes a high-frequency scenario.

In the high-frequency scenario, only Manner 2 is included. For example, in an 802.11ay protocol, 1 bit is utilized to indicate the feedback manner. As shown in a first column of Table 9, 0 is a single carrier (single carrier, SC) physical layer (physical layer, PHY) noncompressed feedback, and 1 is OFDM PHY compressed feedback. In a case in which a value of a feedback type subfield in Table 9 is 1, the first device compresses $V$ into the series of angle values. For example, $V$ is compressed into the series of angle values by using the formula shown in Formula 1.8. The series of angle values include the angle value $\phi$ and the angle value $\psi$. Then, quantization and coding are performed on $\phi$ and $\psi$ based on Table 8, and finally a data frame is formed based on a case in which the value of the feedback type field is 1 in a frame structure of the data frame shown in Table 9, and the data frame is fed back to the second device.

**Table 8**

| Quantized $\psi$ | Quantized $\phi$ |
|---|---|
| $$\psi = \frac{k\pi}{2^{b_\psi+1}} + \frac{\pi}{2^{b_\psi+2}}$$ radians (radians) | $$\phi = \frac{k\pi}{2^{b_\phi-1}} + \frac{\pi}{2^{b_\phi}}$$ radians (radians) |
| where | where |
| $k = 0, 1, ..., 2^{b_\psi}-1$. | $k = 0, 1, ..., 2^{b_\phi}-1$. |
| $b_\psi$ is the number of bits used to quantize $\psi$ (defined by the Codebook Information field of the MIMO Feedback Control element). | $b_\phi$ is the number of bits used to quantize $\phi$ (defined by the Codebook Information field of the MIMO Feedback Control element). |

**Table 9**

| Feedback type field value (Feedback Type subfield value) | Size(bits) | | |
|---|---|---|---|
| | 2.16GHz, 4.32GHz, 6.48GHz, and 8.64GHz channel (channel) | 2.16+2.16*GHz* or 4.32+4.32*GHz* channel | |
| 0 | $2\times8\times N_c\times N_r$ | $2\times8\times(N_c/2)\times(N_r/2)$ | 2.16-GHz or 4.32-GHz channel including a primary channel (2.16-GHz or 4.32-GHz channel containing the primary channel) |
| | | $2\times8\times(N_c/2)\times(N_r/2)$ | 2.16-GHz or 4.32-GHz channel not including the primary channel (2.16-GHz or 4.32-GHz channel not containing the primary channel) |

(continued)

| Feedback type field value (Feedback Type subfield value) | Size(bits) | | |
|---|---|---|---|
| | 2.16GHz, 4.32GHz, 6.48GHz, and 8.64GHz channel (channel) | 2.16+2.16*GHz* or 4.32+4.32*GHz* channel | |
| 1 | $N_a\times(b_\psi+b_\varphi)/2$, with $$N_\varphi = (N_r \times \frac{N_r+1}{2} -N_r)$$ and $$N_\psi = (N_r \times \frac{N_r+1}{2}),$$ $N_a=N_\psi+N_\phi$ | $N_a\times(b_\psi+b_\varphi)/2$ with $$N_\varphi = ((N_r/2) \times \frac{(N_r/2)+1}{2} -(N_r/2))$$ and $$N_\psi = ((N_r/2) \times \frac{(N_r/2)-1}{2})$$ $N_a=N_\psi+N_\phi$ | 2.16-GHz or 4.32-GHz channel including the primary channel (2.16-GHz or 4.32-GHz channel containing the primary channel) |
| | | $N_a\times(b_\psi+b_\varphi)/2$ | 2.16-GHz or 4.32-GHz channel not including the primary channel (2.16-GHz or 4.32-GHz channel not containing the primary channel) |

For example, as shown in Table 9, for channels in different modes, corresponding quantities of quantized and coded bits are different. When the value of the feedback type field is 1, that is, the matrix *V* is fed back in Manner 2, for the channels in different modes, the corresponding quantities of quantized and coded bits are different. For example, for channels whose bandwidths are 2.16 GHz, 4.32 GHz, and the like and channels whose bandwidths are 2.16+2.16*GHz* , 4.32+4.32*GHz*, and the like, the angle value in the matrix *V* may be quantized and coded into different bits.

The following describes in detail a method for which a second device reconstructs, after receiving a data frame fed back by a first device, each matrix *V*, and extracts attribute information of a target object. It should be noted that the method is applicable to both of a low-frequency scenario and a high-frequency scenario.

(1) Extracting a target distance: It is assumed that a quantity of column vectors in a matrix *V* is denoted as $N_c$, and each column vector corresponds to one target object or one LOS path. For example, a first column vector that is in a matrix *V* and that corresponds to a maximum eigenvalue in an eigenvalue matrix $\Sigma$ corresponds to the LOS path. For different subcarriers included in any channel sounding, elements at a same location are sequentially selected for column vectors in the matrix *V*, and sampling is performed on the elements. For example, an nth element is selected for each column vector, where n is a positive integer. Then, fast Fourier transform (fast Fourier transform, FFT) processing is performed on the samples, and a distance corresponding to a peak in a spectrum graph that is obtained is the target distance. Considering that the sampling and the FFT processing are conventional technologies, details are not described in this application.

(2) Target angle: It can be learned from a conclusion in a matrix analysis theory that each column vector in the matrix *V* may be represented as a linear combination of column vectors in a matrix *H*. However, a linear phase difference that is used to extract the target angle is kept between column vectors in the matrix *H*, that is, phase information that is used to extract the target angle is kept in the matrix *H*. Therefore, in a case in which the matrix *V* may be obtained by using the linear combination of the column vectors in the matrix *H*, the matrix *V* also keeps the phase information that is used to extract the target angle. For a matrix *V* corresponding to any subcarrier, multiple signal classification (multiple signal classification, MUSIC) algorithm processing is sequentially performed on each column vector in the matrix *V*, to obtain a coarsely estimated target angle value of each target object. Then, after a covariance is solved on the matrix *V*, the MUSIC processing is performed on the matrix *V*, to obtain a precise target angle value of each target object. An angle corresponding to a peak in an obtained spectrum graph is the target angle. Considering that the MUSIC processing is the conventional technology, details are not described in this application.

(3) Target Doppler shift: It is assumed that the quantity of column vectors in the matrix *V* is denoted as $N_c$, and each column vector corresponds to the target object or the LOS path. For example, the first column vector in the matrix *V* corresponding to the maximum eigenvalue in the eigenvalue matrix $\Sigma$ corresponds to the LOS path. For same subcarriers of different channel sounding frames, elements at a same location are sequentially selected for each column vector in the matrix *V*, and sampling is performed. Then, fast Fourier transform FFT processing is performed on the samples, and a Doppler frequency corresponding to a peak in an obtained spectrum graph is the target Doppler shift.

The following describes a simulation result of extracting attribute information of a target object from a matrix *V* obtained by using the technical solutions provided in embodiments of this application and a simulation result of extracting the attribute information of the target object from a matrix *V* obtained by using an existing solution.

For example, there is one LOS path and one target reflection echo, that is, one target object, between a second device and a first device. Table 10 is a simulation parameter table.

**Table 10**

| Parameter | Symbol | Value |
|---|---|---|
| Quantity of transmitting antennas | $N_t$ | 8 |
| Quantity of receiving antennas | $N_r$ | 8 |
| Bandwidth | *B* | 120 MHz |
| Quantity of subcarriers | N | 256 |
| Pulse repetition period | (pulse repetition frequency, PRF) | 1 kHz |
| LOS path distance | - | 15 m |
| LOS path angle | $(\theta_t, \theta_r)$ | -70°, 45° |
| Target distance | *d* | 45 m |
| Target angle | $(\theta_t, \theta_r)$ | -15°, 30° |
| Target Doppler shift | $f_d$ | 40 Hz |

The bandwidth is a bandwidth of a channel, and the pulse repetition period is a period of sending a channel sounding frame. The LOS path angle includes $\theta_t$ and $\theta_r$, where $\theta_t$ is an angle of departure, $\theta_r$ is an angle of arrival, and $\theta_t$ and $\theta_r$ may be shown in $\theta_t$' and $\theta_r$' shown in FIG. 3.

A quantity of valid paths is a sum of a quantity of LOS paths and a quantity of target reflection echoes. Therefore, in the example shown in Table 10, a channel includes two valid paths. Because the quantity of valid paths is equal to a rank of a CSI matrix $H_2$, the rank of the CSI matrix is 2. A matrix *V* obtained by performing SVD decomposition on the CSI matrix includes two orthogonal vectors, that is, two column vectors, and the two orthogonal vectors are denoted as $v_1$ and $v_2$. Information such as the target distance, the target angle, and the target Doppler shift is extracted separately from $v_1$ and $v_2$. An extraction method is described above, and details are not described herein again.

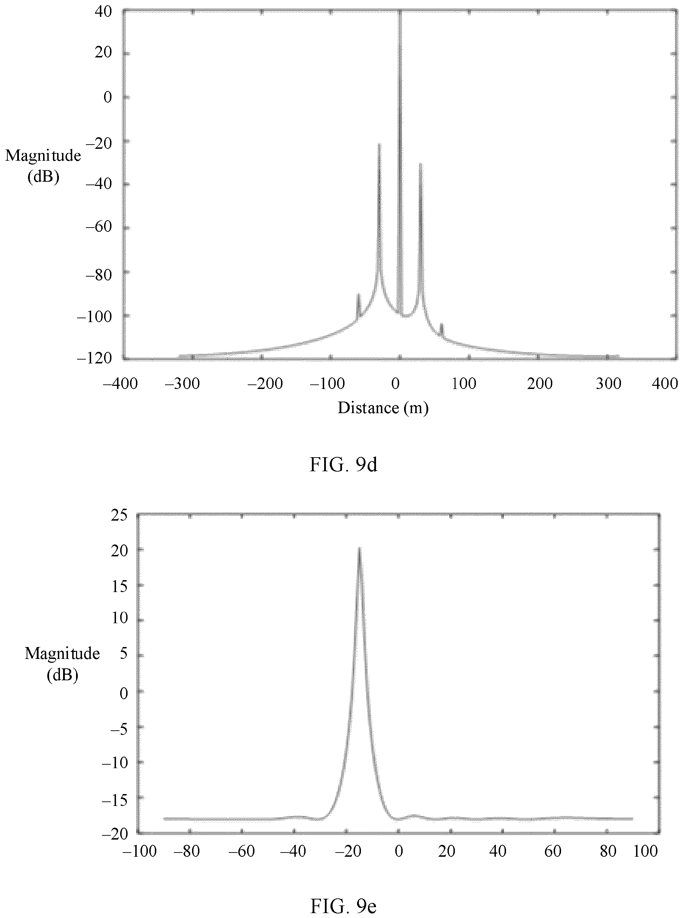

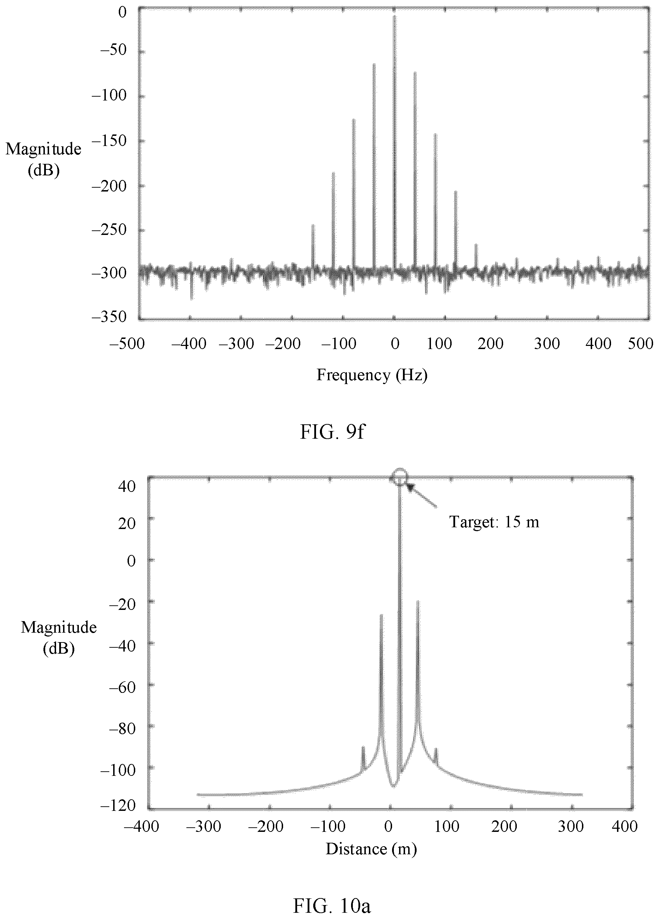

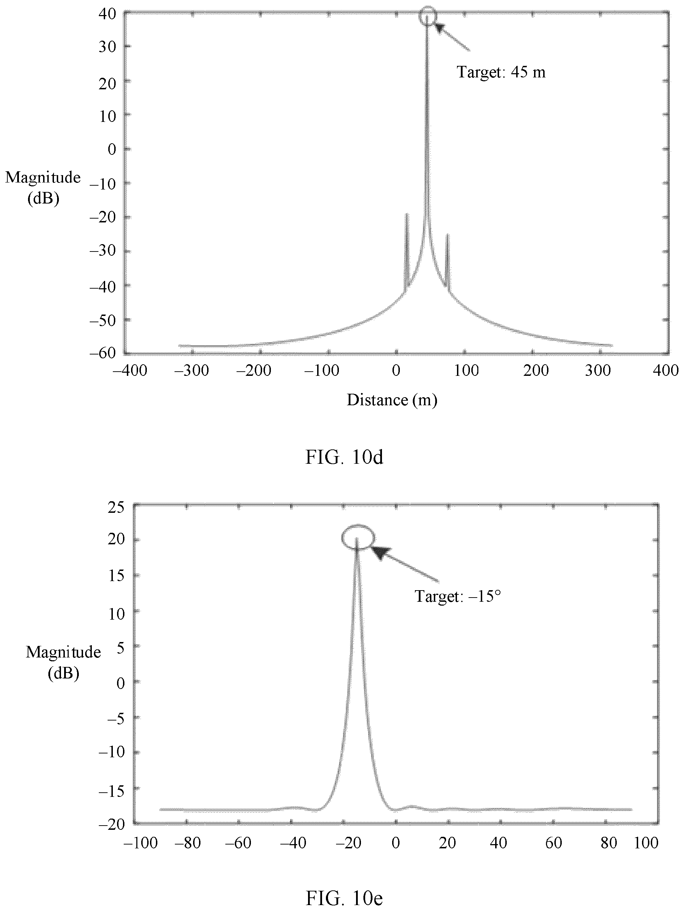

For example, final extraction results are shown in FIG. 9a to FIG. 10f. FIG. 9a to FIG. 9c, and FIG. 10a to FIG. 10c are all related schematic diagrams of extracting the target distance, the target angle, and the target Doppler shift from the column vector $v_1$. FIG. 9d to FIG. 9f, and FIG. 10d to FIG. 10f are all related schematic diagrams of the column vector $v_2$.

FIG. 9a to FIG. 9f are schematic diagrams of results that are extracted from the matrix *V* solved by using the existing solution, and FIG. 10a to FIG. 10f are schematic diagrams of results that are extracted from the matrix *V* solved by using the technical solutions according to embodiments of this application.

FIG. 9a, FIG. 9d, FIG. 10a, and FIG. 10d are extracted distance spectrums. A vertical axis represents a magnitude, a horizontal axis represents a distance, and a horizontal coordinate corresponding to a peak is the target distance or the LOS path distance.

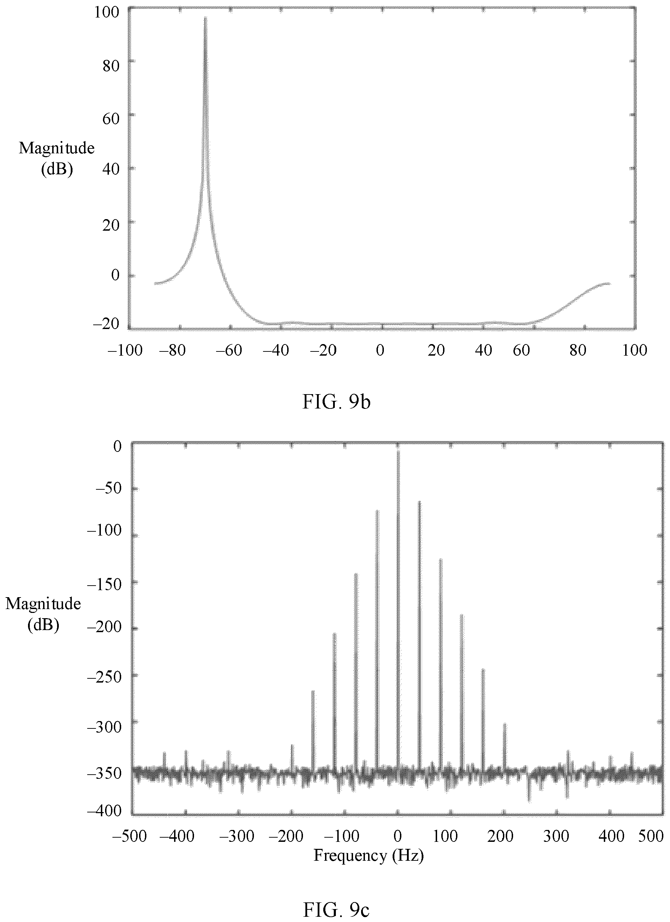

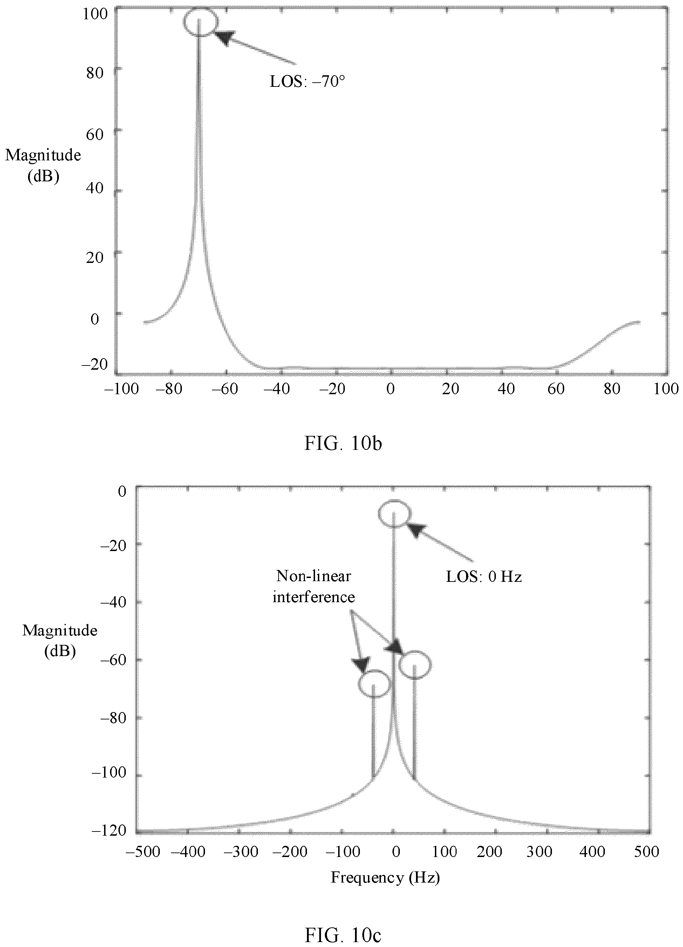

FIG. 9b, FIG. 9e, FIG. 10b, and FIG. 10e are extracted angle spectrums. A vertical axis represents the magnitude, a horizontal axis represents the angle of departure, and a horizontal coordinate corresponding to a peak is $\theta_t$ of the target angle or $\theta_t$ of the LOS path angle.

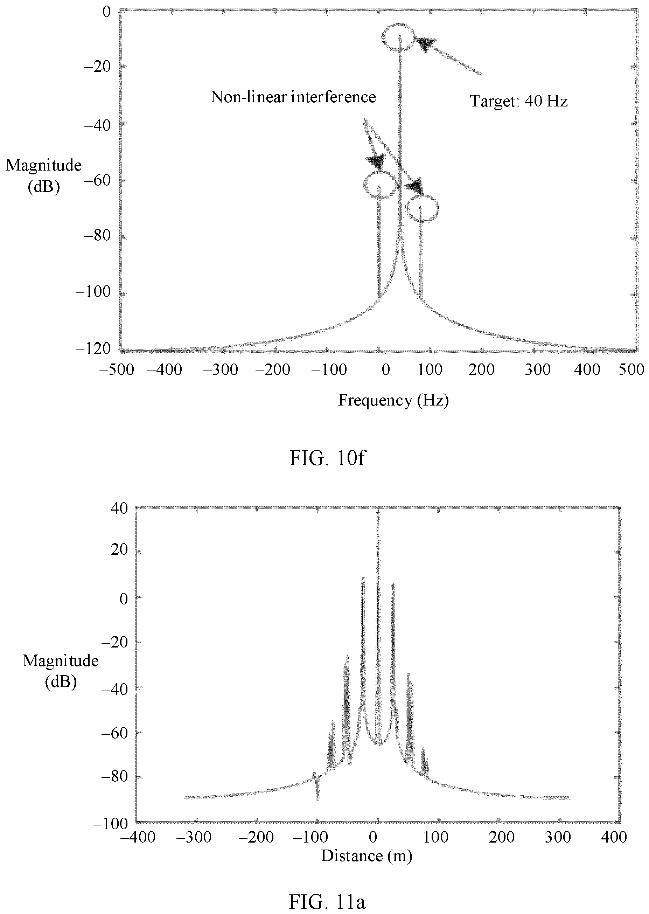

FIG. 9c, FIG. 9f, FIG. 10c, and FIG. 10f are extracted Doppler spectrums. A vertical axis represents the magnitude, a horizontal axis represents a Doppler shift, and a horizontal coordinate corresponding to a peak is a Doppler shift corresponding to the target Doppler shift or a Doppler corresponding to the LOS path.

It can be learned from FIG. 9a to FIG. 10f that the technical solutions provided in embodiments of this application may effectively extract the attribute information of the target object, but the existing technical solution cannot achieve this effect. For example, in FIG. 10a, the horizontal coordinate is 15 m, which is the LOS path distance; and in FIG. 10d, the horizontal coordinate is 45 m, which is the target distance. However, the horizontal coordinates in FIG. 9a and FIG. 9d do not correspond to the target distance and/or the LOS path distance in Table 10. The target angle and the target Doppler shift are similar to the target distance, and examples are not provided one by one.

Therefore, it can be learned from the foregoing simulation result that, when a quantity of target objects and the quantity of LOS paths are less than dimensions of a channel matrix, each column vector in the matrix $V$ obtained through solving by using the technical solutions provided in embodiments of this application corresponds to one target object. In this case, the attribute information of the target object can be effectively extracted from the matrix $V$.

The foregoing simulation result is described by using the target object as an example. The following uses an example in which the second device and the first device have one LOS path and two target reflection echoes, that is, two target objects. Table 11 is a simulation parameter table.

**Table 11**

| Parameter | Symbol | Value |
|---|---|---|
| Quantity of transmitting antennas | $N_t$ | 8 |
| Quantity of receiving antennas | $N_r$ | 8 |
| Bandwidth | $B$ | 120 MHz |
| Quantity of subcarriers | N | 256 |
| Pulse repetition period | (pulse repetition frequency, PRF) | 1 kHz |
| LOS path distance | | 15 m |
| LOS path angle | $(\theta_t, \theta r)$ | -70°, 45° |
| Target 1 distance | $d$ | 45 m |
| Target 1 angle | $(\theta_t, \theta r)$ | -15°, 30° |
| Target 1 Doppler shift | $f_d$ | 40 Hz |
| Target 2 distance | $d$ | 70 m |
| Target 2 angle | $(\theta_t, \theta r)$ | 0°, 75° |
| Target 2 Doppler shift | $f_d$ | 100 Hz |

For descriptions of the parameters in Table 11, refer to related descriptions in Table 3. Details are not described herein again.

As shown in Table 11, in this case, the channel includes three valid paths, the rank of the CSI matrix $H_2$ is 3. A matrix $V$ obtained by performing SVD decomposition on $H_2$ includes three column vectors, which are denoted as $v_1$, $v_2$, and $v_3$. The information such as the target distance, the target angle, and the target Doppler shift is extracted separately from $v_1$, $v_2$, and $v_3$.

For example, final extraction results are shown in FIG. 11a to FIG. 12i. FIG. 11a to FIG. 11c, and FIG. 12a to FIG. 12c are all related schematic diagrams of extracting the target distance, the target angle, and the target Doppler shift from the column vector $v_1$. FIG. 11d to FIG. 11f, and FIG. 12d to FIG. 12f are all related schematic diagrams of the column vector $v_2$. FIG. 11g to FIG. 11i, and FIG. 12g to FIG. 12i are all related schematic diagrams of the column vector $v_3$.

FIG. 11a to FIG. 11i are schematic diagrams of results that are extracted from the matrix $V$ solved by using the existing solution, and FIG. 12a to FIG. 12i are schematic diagrams of results that are extracted from the matrix $V$ solved by using the technical solutions according to embodiments of this application.

FIG. 11a, FIG. 11d, FIG. 11g, FIG. 12a, FIG. 12d, and FIG. 12g are extracted distance spectrums. A vertical axis represents the magnitude, a horizontal axis represents the distance, and a horizontal coordinate corresponding to a peak is the target distance or the LOS path distance.

FIG. 11b, FIG. 11e, FIG. 11h, FIG. 12b, FIG. 12e, and FIG. 12h are extracted angle spectrums. A vertical axis represents the magnitude, a horizontal axis represents the angle of departure, and a horizontal coordinate corresponding to a peak is $\theta_t$ of the target angle or $\theta_t$ of the LOS path angle.

FIG. 11c, FIG. 11f, FIG. 11i, FIG. 12c, FIG. 12f, and FIG. 12i are extracted Doppler spectrums. A vertical axis represents the magnitude, a horizontal axis represents the Doppler shift, and a horizontal coordinate corresponding to a peak is the Doppler shift corresponding to the target Doppler shift or the Doppler shift corresponding to the LOS path.

Simulation results shown in FIG. 11a to FIG. 12i further verify that the technical solutions provided in embodiments of this application can effectively extract the attribute information of the target object.

The foregoing mainly describes the solutions provided in embodiments of this application from a perspective of interaction between elements. It can be understood that, to implement the foregoing functions, each element, for example, the first device and the second device, includes a corresponding hardware structure and/or a software module for performing each function. A person of ordinary skill in the art should be easily aware that, in combination with units and steps of algorithms of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

FIG. 13 shows a communication apparatus according to an embodiment of this application.

In a possible example, the communication apparatus is a first device, and the communication apparatus includes a transceiver unit 1301 and a processing unit 1302.

The transceiver unit 1301 is configured to receive at least one channel sounding frame from a second device. The processing unit 1302 is configured to determine at least one first channel state information CSI matrix $H_1$ based on the at least one channel sounding frame, where $H_1$ indicates a channel state, and the channel sounding frame is in a one-to-one correspondence with $H_1$. Dimensions of $H_1$ are $N_r \times N_t \times K$, where $N_t$ is a quantity of antennas of the second device, $N_r$ is a quantity of antennas of the communication apparatus, $K$ is a quantity of subcarriers that carry the channel sounding frame, and $N_t$, $N_r$, and $K$ are all positive integers. The processing unit 1302 is further configured to perform eigenvalue decomposition on a covariance matrix $R_{HH}$ of $H_2$, to obtain an eigenvector matrix $U$ and an eigenvalue matrix $\Sigma$, where $H_2$ is determined based on $H_1$, and $H_2$ is a CSI matrix corresponding to any subcarrier. The processing unit 1302 is further configured to determine, based on $H_2$, $U$, and $\Sigma$, a second CSI matrix $V$ corresponding to $H_1$. The transceiver unit 1301 is further configured to feed back at least one matrix $V$ corresponding to the at least one matrix $H_1$ to the second device, where the at least one matrix $V$ is used to determine attribute information of a target object.

In a possible design, $R_{HH}$ satisfies: $R_{HH} = H_2 H_2^H$ , and $H_2^H$ is a conjugate transpose of $H_2$.

In a possible design, a column vector $u_s$ in $U$ and a column vector $v_s$ in $V$ satisfy the following condition:

$$v_s = \frac{H_2^H u_s}{\sigma_s}$$

. $\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

In a possible design, a condition for obtaining the column vectors in U includes: assigning b to an $a^{th}$ element in each column vector in U, where a is a positive integer, and b is a real number.

In a possible design, the attribute information of the target object includes a target distance, and the target distance is a sum of a distance between the target object and the first device and a distance between the target object and the second device. The target distance is determined by at least two matrices $V$ corresponding to one matrix $H_1$.

In a possible design, the attribute information of the target object further includes a target angle, and the target angle includes a transmit angle between the second device and the target object. The target angle is determined by one matrix $V$.

In a possible design, the attribute information of the target object further includes a target Doppler shift, and the target Doppler shift is a difference between a frequency at which the first device receives the channel sounding frame through the target object and a frequency at which the second device sends the channel sounding frame. The target Doppler shift is determined by at least one matrix $V$ corresponding to at least two matrices $H_1$.

In a possible design, one column vector in $V$ corresponds to one target object.

In a possible design, the transceiver unit 1301 is further configured to receive at least one trigger frame from the second device, where the at least one trigger frame indicates the first device to determine $V$ based on $H_2$, $U$, and $\Sigma$.

In another possible example, the communication apparatus is the second device, and the communication apparatus includes the transceiver unit 1301.

The transceiver unit 1301 is configured to send the at least one channel sounding frame to the first device. The transceiver unit 1301 is further configured to receive, from the first device, at least one second CSI matrix $V$ corresponding to the at least one matrix $H_1$, where the at least one matrix $V$ is used to determine the attribute information of the target object, the at least one matrix $H_1$ is determined based on the at least one channel sounding frame, $H_1$ indicates the channel state, and the channel sounding frame is in the one-to-one correspondence with $H_1$. The dimensions of $H_1$ are $N_r \times N_t \times K$, where $N_t$ is the quantity of antennas of the second device, $K$ is a quantity of antennas of the first device, $K$ is the quantity of subcarriers carrying the channel sounding frame, and $N_t$, $N_r$, and $K$ are all positive integers. $V$ corresponding to $H$ is determined by $H_2$, $U$, and $\Sigma$, where $U$ is the eigenvector matrix of the covariance matrix $R_{HH}$ of $H_2$, $\Sigma$ is the eigenvalue matrix of $R_{HH}$, $H_2$ is determined based on $H_1$, and $H_2$ is the CSI matrix corresponding to any subcarrier.

Optionally, the communication apparatus may further include the processing unit 1302. The processing unit 1302 is configured to generate the at least one channel sounding frame.

In a possible design, $R_{HH}$ satisfies: $R_{HH} = H_2 H_2^H$, and $H_2^H$ is the conjugate transpose of $H_2$.

In a possible design, the column vector $u_s$ in $U$ and the column vector $v_s$ in $V$ satisfy the following condition:

$$v_s = \frac{H_2^H u_s}{\sigma_s}$$

. $\sigma_s$ is the singular value corresponding to $v_s$, $\sigma_s$ is the arithmetic square root of the corresponding eigenvalue in $\Sigma$, $S$ is the integer from 1 to m, m is the quantity of column vectors in $V$, and m is a positive integer.

In a possible design, the condition for obtaining the column vectors in U includes: assigning b to the a$^{th}$ element in each column vector in U, where a is a positive integer, and b is a real number.

In a possible design, the attribute information of the target object includes the target distance, and the target distance is a sum of the distance between the target object and the first device and the distance between the target object and the second device. The target distance is determined by the at least two matrices $V$ corresponding to the $H_1$.

In a possible design, the attribute information of the target object further includes the target angle, and the target angle includes the transmit angle between the second device and the target object. The target angle is determined by one matrix $V$.

In a possible design, the attribute information of the target object further includes the target Doppler shift, and the target Doppler shift is the difference between the frequency at which the first device receives the channel sounding frame by using the target object and the frequency at which the second device sends the channel sounding frame. The target Doppler shift is determined by the at least one matrix $V$ corresponding to the at least two matrices $H_1$.

In a possible design, one column vector in $V$ corresponds to one target object.

In a possible design, the transceiver unit 1301 is further configured to send the at least one trigger frame to the first device, where the at least one trigger frame indicates the first device to determine $V$ based on $H_2$, $U$, and $\Sigma$.

The communication apparatus provided in this embodiment of this application may be implemented in a plurality of product forms. For example, the communication apparatus may be configured as a general-purpose processing system. For another example, the communication apparatus may be implemented by using a general bus architecture. For another example, the communication apparatus may be implemented by using an application specific integrated circuit (application specific integrated circuit, ASIC). The following provides several possible product forms of the communication apparatus provided in this embodiment of this application. It should be understood that the following product forms are merely examples, and the possible product forms of the communication apparatus described in this embodiment of this application are not limited.

FIG. 14 is a result diagram of a possible product form of a communication apparatus according to an embodiment of this application.

As a possible product form, the communication apparatus in this embodiment of this application may be a communication device.

When the communication device is a first device, the communication device includes a processor 1401 and a transceiver 1402. Optionally, the communication device further includes a memory 1403. The processor 1401 is configured to perform step S402, step S403, and step S404 in FIG. 4, and/or another processing operation that needs to be performed by the first device in this embodiment of this application. The transceiver 1402 is configured to perform step S401 and step S405 in FIG. 4, and/or another receiving and sending operation that needs to be performed by the first device in this embodiment of this application.

When the communication device is a second device, the communication device includes the transceiver 1402. Optionally, the communication device further includes the processor 1401 and the memory 1403. The processor 1401 is configured to generate at least one channel sounding frame and/or another processing operation that needs to be performed by the second device in this embodiment of this application. The transceiver 1402 is configured to perform step S401 and step S405 in FIG. 4, and/or another receiving and sending operation that needs to be performed by the second device in this embodiment of this application.

As another possible product form, the communication apparatus described in this embodiment of this application may alternatively be implemented by a general-purpose processor or a dedicated processor that is commonly referred to as a chip.

When the chip is the first device, the chip includes a processing circuit 1401 and a transceiver pin 1402. The processing circuit 1401 is configured to perform step S402, step S403, and step S404 in FIG. 4, and/or the another processing operation that needs to be performed by the first device in this embodiment of this application. The transceiver pin 1402 is configured to perform step S401 and step S405 in FIG. 4, and/or the another receiving and sending operation that needs to be performed by the first device in this embodiment of this application.

When the chip is the second device, the chip includes the transceiver pin 1402. Optionally, the chip may further include the processing circuit 1401. The processing circuit 1401 is configured to generate the at least one channel sounding frame, and/or the another processing operation that needs to be performed by the second device in this embodiment of this application. The transceiver pin 1402 is configured to perform step S401 and step S405 in FIG. 4 and/or the another receiving and sending operation that needs to be performed by the second device in this embodiment of this application.

As another possible product form, the communication apparatus described in this embodiment of this application may alternatively be implemented by using the following circuit or component: one or more field programmable gate arrays (field programmable gate array, FPGA), a programmable logic device (programmable logic device, PLD), a controller, a state machine, gate logic, a discrete hardware component, any other suitable circuits, or any combination of circuits that can perform various functions described in this application.

Optionally, this embodiment of this application further provides a computer program product that carries computer instructions. When the computer instructions are run on a computer, the computer is enabled to perform the method described in the foregoing embodiments.

Optionally, an embodiment of this application further provides a computer-readable storage medium. The computer-readable storage medium stores the computer instructions. When the computer instructions are run on the computer, the computer is enabled to perform the method described in the foregoing embodiments.

A person of ordinary skill in the art may understand that all or some of the foregoing embodiments may be implemented by using software, hardware, firmware, or any combination thereof. When the software is used to implement the embodiments, all or some of the embodiments may be implemented in a form of the computer program product. The computer program product includes one or more computer instructions. When the computer program instructions are loaded and executed on the computer, all or some procedures or functions in embodiments of this application are generated. The computer may be a general-purpose computer, a dedicated computer, a computer network, or another programmable apparatus. The computer instructions may be stored in the computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid state disk (Solid State Disk, SSD)), or the like.

In the several embodiments provided in this application, it should be understood that the disclosed system, apparatus, and method may be implemented in other manners. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical or another form.

The units described as separate parts may or may not be physically separate, and parts displayed as units may or may not be physical units, may be located in one position, or may be distributed on a plurality of devices. Some or all of the units may be selected based on actual requirements to achieve the objectives of the solutions of embodiments.

Based on the descriptions of the foregoing implementations, a person skilled in the art may clearly understand that this application may be implemented by software in addition to necessary universal hardware, or by hardware. In most cases, the former is a better implementation. Based on such an understanding, the technical solutions in this application essentially or the part contributing to the conventional technology may be implemented in a form of a software product. The computer software product is stored in a readable storage medium, such as a floppy disk, a hard disk, or an optical disc of the computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. A variation or replacement within the technical scope disclosed in this application shall fall within the protection scope of this application. Therefore, the protection scope of this application shall be subject to the protection scope of the claims.

**Claims**

1. A communication method, wherein the method comprises:

   receiving, by a first device, at least one channel sounding frame from a second device;
   determining, by the first device, at least one first channel state information CSI matrix $H_1$ based on the at least one channel sounding frame, wherein $H_1$ indicates a channel state, the channel sounding frame is in a one-to-one correspondence with $H_1$, dimensions of $H_1$ are $N_r \times N_t \times K$, $N_t$ is a quantity of antennas of the second device, $N_r$ is a quantity of antennas of the first device, $K$ is a quantity of subcarriers that carry the channel sounding frame, and $N_t$, $N_r$, and $K$ are all positive integers;
   performing, by the first device, eigenvalue decomposition on a covariance matrix $R_{HH}$ of $H_2$ to obtain an eigenvector matrix $U$ and an eigenvalue matrix $\Sigma$, wherein $H_2$ is determined based on $H_1$, and $H_2$ is a CSI matrix corresponding to any subcarrier;
   determining, by the first device based on $H_2$, $U$, and $\Sigma$, a second CSI matrix $V$ corresponding to $H_1$; and
   feeding back, by the first device, at least one matrix $V$ corresponding to the at least one matrix $H_1$ to the second device, wherein the at least one matrix $V$ is used to determine attribute information of a target object.

2. A communication method, wherein the method comprises:

   sending, by a second device, at least one channel sounding frame to a first device; and
   receiving, by the second device from the first device, at least one second CSI matrix $V$ corresponding to at least one matrix $H_1$, wherein the at least one matrix $V$ is used to determine attribute information of a target object, the at least one matrix $H_1$ is determined based on the at least one channel sounding frame, $H_1$ indicates a channel state, and the channel sounding frame is in a one-to-one correspondence with $H_1$, dimensions of $H_1$ are $N_r \times N_t \times K$, $N_t$ is a quantity of antennas of the second device, $N_r$ is a quantity of antennas of the first device, $K$ is a quantity of subcarriers that carry the channel sounding frame, and $N_t$, $N_r$, and $K$ are all positive integers, wherein
   $V$ corresponding to $H_1$ is determined by $H_2$, $U$, and $\Sigma$, $U$ is an eigenvector matrix of a covariance matrix $R_{HH}$ of $H_2$, $\Sigma$ is an eigenvalue matrix of $R_{HH}$, $H_2$ is determined based on $H_1$, and $H_2$ is a CSI matrix corresponding to any subcarrier.

3. The method according to claim 1 or 2, wherein $R_{HH}$ satisfies: $R_{HH} = H_2 H_2^H$, and $H_2^H$ is a conjugate transpose of $H_2$.

4. The method according to any one of claims 1 to 3, wherein a column vector $u_s$ in $U$ and a column vector $v_s$ in $V$ satisfy the following condition:

$$v_s = \frac{H_2^H u_s}{\sigma_s},$$

   wherein
   $\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

5. The method according to any one of claims 1 to 4, wherein a condition for obtaining the column vectors in U comprises: assigning b to an $a^{th}$ element in each column vector in U, wherein a is a positive integer, and b is a real number.

6. The method according to any one of claims 1 to 5, wherein the attribute information of the target object comprises a target distance, and the target distance is a sum of a distance between the target object and the first device and a distance between the target object and the second device; and
   the target distance is determined by at least two matrices $V$ corresponding to one matrix $H_1$.

7. The method according to any one of claims 1 to 6, wherein the attribute information of the target object further comprises a target angle, and the target angle comprises a transmit angle between the second device and the target object; and
   the target angle is determined by one matrix $V$.

8. The method according to any one of claims 1 to 7, wherein the attribute information of the target object further comprises a target Doppler shift, and the target Doppler shift is a difference between a frequency at which the first device receives the channel sounding frame through the target object and a frequency at which the second device sends the channel sounding frame; and

   the target Doppler shift is determined by at least one matrix $V$ corresponding to at least two matrices $H_1$.

9. The method according to any one of claims 1 to 8, wherein one column vector in $V$ corresponds to one target object.

10. The method according to any one of claims 1 and 3 to 9, wherein after the receiving, by a first device, at least one channel sounding frame from a second device, the method further comprises:
    receiving, by the first device, at least one trigger frame from the second device, wherein the at least one trigger frame indicates the first device to determine $V$ based on $H_2$, $U$, and $\Sigma$.

11. The method according to any one of claims 2 to 9, wherein before receiving, by the second device from the first device, at least one second CSI matrix $V$ corresponding to at least one matrix $H_1$, the method further comprises:
    sending, by the second device, at least one trigger frame to the first device, wherein the at least one trigger frame indicates the first device to determine $V$ based on $H_2$, $U$, and $\Sigma$.

12. A communication apparatus, comprising:

    a transceiver unit, configured to receive at least one channel sounding frame from a second device; and
    a processing unit, configured to determine at least one first channel state information CSI matrix $H_1$ based on the at least one channel sounding frame, wherein $H_1$ indicates a channel state, the channel sounding frame is in a one-to-one correspondence with $H_1$, dimensions of $H_1$ are $N_r \times N_t \times K$, $N_t$ is a quantity of antennas of the second device, $N_r$ is a quantity of antennas of the communication apparatus, $K$ is a quantity of subcarriers that carry the channel sounding frame, and $N_t$, $N_r$, and $K$ are all positive integers, wherein
    the processing unit is further configured to perform eigenvalue decomposition on a covariance matrix $R_{HH}$ of $H_2$, to obtain an eigenvector matrix $U$ and an eigenvalue matrix E, wherein $H_2$ is determined based on $H_1$, and $H_2$ is a CSI matrix corresponding to any subcarrier;
    the processing unit is further configured to determine, based on $H_2$, $U$, and $\Sigma$, a second CSI matrix $V$ corresponding to $H_1$; and
    the transceiver unit is further configured to feed back at least one matrix $V$ corresponding to the at least one matrix $H_1$ to the second device, wherein the at least one matrix $V$ is used to determine attribute information of a target object.

13. A communication apparatus, comprising:

    a transceiver unit, configured to send at least one channel sounding frame to a first device, wherein
    the transceiver unit is further configured to receive, from the first device, at least one second CSI matrix $V$ corresponding to at least one matrix $H_1$, wherein the at least one matrix $V$ is used to determine attribute information of a target object, the at least one matrix $H_1$ is determined based on the at least one channel sounding frame, $H_1$ indicates a channel state, and the channel sounding frame is in a one-to-one correspondence with $H_1$, dimensions of $H_1$ are $N_r \times N_t \times K$, $N_t$ is a quantity of antennas of a second device, $N_r$ is a quantity of antennas of the first device, $K$ is a quantity of subcarriers that carry the channel sounding frame, and $N_t$, $N_r$, and $K$ are all positive integers; and
    $V$ corresponding to $H_1$ is determined by $H_2$, $U$, and $\Sigma$, wherein $U$ is an eigenvector matrix of a covariance matrix $R_{HH}$ of $H_2$, $\Sigma$ is an eigenvalue matrix of $R_{HH}$, $H_2$ is determined based on $H_1$, and $H_2$ is a CSI matrix corresponding to any subcarrier.

14. The apparatus according to claim 12 or 13, wherein $R_{HH}$ satisfies: $R_{HH} = H_2 H_2^H$, and $H_2^H$ is a conjugate transpose of $H_2$.

15. The apparatus according to any one of claims 12 to 14, wherein a column vector $u_s$ in $U$ and a column vector $v_s$ in $V$ satisfy the following condition:

$$v_s = \frac{H_2^H u_s}{\sigma_s};$$

$\sigma_s$ is a singular value corresponding to $v_s$, $\sigma_s$ is an arithmetic square root of a corresponding eigenvalue in $\Sigma$, $S$ is an integer from 1 to m, m is a quantity of column vectors in $V$, and m is a positive integer.

16. The apparatus according to any one of claims 12 to 15, wherein a condition for obtaining the column vectors in U comprises: assigning b to an $a^{th}$ element in each column vector in U, wherein a is a positive integer, and b is a real number.

17. The apparatus according to any one of claims 12 to 16, wherein the attribute information of the target object comprises a target distance, and the target distance is a sum of a distance between the target object and the first device and a distance between the target object and the second device; and
the target distance is determined by at least two matrices $V$ corresponding to one matrix $H_1$.

18. The apparatus according to any one of claims 12 to 17, wherein the attribute information of the target object further comprises a target angle, and the target angle comprises a transmit angle between the second device and the target object; and
the target angle is determined by one matrix $V$.

19. The apparatus according to any one of claims 12 to 18, wherein the attribute information of the target object further comprises a target Doppler shift, and the target Doppler shift is a difference between a frequency at which the first device receives the channel sounding frame through the target object and a frequency at which the second device sends the channel sounding frame; and
the target Doppler shift is determined by at least one matrix $V$ corresponding to at least two matrices $H_1$.

20. The apparatus according to any one of claims 12 to 19, wherein one column vector in $V$ corresponds to one target object.

21. The apparatus according to any one of claims 12 and 14 to 20, wherein
the transceiver unit is further configured to receive at least one trigger frame from the second device, and the at least one trigger frame indicates the first device to determine $V$ based on $H_2$, $U$, and $\Sigma$.

22. The apparatus according to any one of claims 13 to 20, wherein
the transceiver unit is further configured to send at least one trigger frame to the first device, and the at least one trigger frame indicates the first device to determine $V$ based on $H_2$, $U$, and $\Sigma$.

23. A communication apparatus, wherein the communication apparatus comprises a transceiver, and the communication apparatus is configured to implement the communication method according to any one of claims 1 to 11.

24. A computer-readable storage medium, wherein the computer-readable storage medium comprises a computer program or instructions, and when the computer program or the instructions are run on a computer, the computer is enabled to perform the communication method according to any one of claims 1 to 11.

25. A computer program product, wherein the computer program product comprises a computer program or instructions, and when the computer program or the instructions are run on a computer, the computer is enabled to perform the communication method according to any one of claims 1 to 11.

26. A chip, wherein the chip comprises a processing circuit and a transceiver pin, and when instructions are run by the processing circuit, the chip is enabled to perform the communication method according to any one of claims 1 to 11.

FIG. 1

FIG. 2

FIG. 3

S401: At least one channel sounding frame

S402: Determine at least one first CSI matrix $H_1$ based on the at least one channel sounding frame

S403: Perform eigenvalue decomposition on a covariance matrix $R_{HH}$ of $H_2$ to obtain an eigenvector matrix U and an eigenvalue matrix $\Sigma$

S404: Determine, based on $H_2$, U, and $\Sigma$, a second CSI matrix V corresponding to $H_1$

S405: Feed back at least one matrix V corresponding to the at least one matrix $H_1$

FIG. 4

MAC header
(MAC header)

| Frame Control (Frame control) | Duration Duration | RA (Receiver address) | TA (Transmitter address) | Common Info (Common information) | User Info List (User information list) | Padding (Padding field) | FCS (Frame check sequence) |
|---|---|---|---|---|---|---|---|

Octets (Octets):   2        2        6        6      8 or more   Variable   Variable   4

FIG. 5

B0        B3 B4      B15      B16                      B54        B62      B63

| Trigger Type (Trigger type) | UL Length (Uplink length) | More TFs (More trigger frames) | ... | UL HE-SIG-A2 Reserved (Uplink HE signaling A2 reserved) | Reserved (Reserved) | Trigger Dependent Common Info (Trigger dependent common information) |
|---|---|---|---|---|---|---|

Bits        4          12          1          ...        9          1          Variable

FIG. 6

B0        B3 B4      B15      B16                      B55      B56      B62      63

| Trigger Type (Trigger type) | UL Length (Uplink length) | More TFs (More trigger frames) | ... | Special User Info Field Present (Special user information field present) | Reserved (Reserved) | Reserved (Reserved) | Trigger Dependent Common Info (Trigger dependent common information) |
|---|---|---|---|---|---|---|---|

Bits        4          12          1          ...        1          7          1          Variable

FIG. 7

| B0      B7 | B8   B15 | B16      B23 | | B86 | B87 | B88 | B89 B90 B91 | B95 |
|---|---|---|---|---|---|---|---|---|
| Element ID (Element ID) | Length (length) | Element ID Extension (Element ID extension) | ... | Dual Polarization TRN (Dual polarization training field) | Digital Beamforming Request (Digital beamforming request) | Feedback Type (Feedback type) | Nc Index (Nc index) | Reserved (Reserved) |
| Bits   8 | 8 | 8 | ... | 1 | 1 | 1 | 2 | 5 |

FIG. 8

FIG. 9a

FIG. 9b

FIG. 9c

FIG. 9d

FIG. 9e

FIG. 9f

FIG. 10a

FIG. 10b

FIG. 10c

FIG. 10d

FIG. 10e

FIG. 10f

FIG. 11a

FIG. 11b

FIG. 11c

FIG. 11d

FIG. 11e

FIG. 11f

FIG. 11g

FIG. 11h

FIG. 11i

FIG. 12a

FIG. 12b

FIG. 12c

FIG. 12d

FIG. 12e

FIG. 12f

FIG. 12g

FIG. 12h

FIG. 12i

FIG. 13

Transceiver/
Transceiver pin
1402

Processor/
Processing circuit
1401

Memory
1403

Bus

FIG. 14

## INTERNATIONAL SEARCH REPORT

| International application No. |
| --- |
| **PCT/CN2022/107545** |

| A. | CLASSIFICATION OF SUBJECT MATTER |
| --- | --- |
| | H04W 24/02(2009.01)i;  H04B 17/309(2015.01)i |

According to International Patent Classification (IPC) or to both national classification and IPC

| B. | FIELDS SEARCHED |
| --- | --- |

Minimum documentation searched (classification system followed by classification symbols)

    H04W; H04B

Documentation searched other than minimum documentation to the extent that such documents are included in the fields searched

Electronic data base consulted during the international search (name of data base and, where practicable, search terms used)

    WPI, EPODOC, CNPAT, CNKI, 3GPP: 信道探测帧 反馈 矩阵 子载波 相位 天线 属性 NDP CSI MIMO SVD H1 H2 matrix subcarrier feedback phase beamforming steering

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113115415 A (HUAWEI TECHNOLOGIES CO., LTD.) 13 July 2021 (2021-07-13) description, paragraphs [0081]-[0087] | 1-26 |
| A | CN 105634572 A (GUANGZHOU NUFRONT COMPUTER SYSTEM CHIP CO., LTD.) 01 June 2016 (2016-06-01) entire document | 1-26 |
| A | US 2011273977 A1 (SHAPIRA, Nir et al.) 10 November 2011 (2011-11-10) entire document | 1-26 |
| A | US 2020343960 A1 (HUAWEI TECHNOLOGIES CO., LTD.) 29 October 2020 (2020-10-29) entire document | 1-26 |
| A | INTEL CORP. "3GPP TSG RAN WG1 Meeting #99 R1-1912197" *Channel Access Mechanism for NR-unlicensed,* Vol. , No. , 22 November 2019 (2019-11-22), ISSN: , entire document | 1-26 |
| A | US 2007298742 A1 (QUALCOMM INC.) 27 December 2007 (2007-12-27) entire document | 1-26 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2022** | **21 October 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 380 219 A1

**INTERNATIONAL SEARCH REPORT**
Information on patent family members

International application No.

**PCT/CN2022/107545**

| Patent document cited in search report | | | Publication date (day/month/year) | Patent family member(s) | | | Publication date (day/month/year) |
|---|---|---|---|---|---|---|---|
| CN | 113115415 | A | 13 July 2021 | WO | 2021139736 | A1 | 15 July 2021 |
| CN | 105634572 | A | 01 June 2016 | WO | 2012100691 | A1 | 02 August 2012 |
| | | | | CN | 102447539 | A | 09 May 2012 |
| | | | | KR | 20140004199 | A | 10 January 2014 |
| | | | | CN | 105680923 | A | 15 June 2016 |
| | | | | CN | 105721113 | A | 29 June 2016 |
| | | | | CN | 103380586 | A | 30 October 2013 |
| | | | | JP | 2014508452 | A | 03 April 2014 |
| | | | | EP | 2670075 | A1 | 04 December 2013 |
| | | | | US | 2014044069 | A1 | 13 February 2014 |
| US | 2011273977 | A1 | 10 November 2011 | US | 2015124900 | A1 | 07 May 2015 |
| | | | | EP | 2567467 | A2 | 13 March 2013 |
| | | | | WO | 2011138777 | A2 | 10 November 2011 |
| US | 2020343960 | A1 | 29 October 2020 | BR | 112020014143 | A2 | 08 December 2020 |
| | | | | CN | 110034803 | A | 19 July 2019 |
| | | | | WO | 2019137431 | A1 | 18 July 2019 |
| | | | | CN | 113472410 | A | 01 October 2021 |
| US | 2007298742 | A1 | 27 December 2007 | RU | 2009102533 | A | 10 August 2010 |
| | | | | IN | 6773CHENP2008 | A | 27 March 2009 |
| | | | | US | 2012127899 | A1 | 24 May 2012 |
| | | | | TW | 200812283 | A | 01 March 2008 |
| | | | | JP | 2012199943 | A | 18 October 2012 |
| | | | | SG | 173324 | A1 | 29 August 2011 |
| | | | | JP | 2009543471 | A | 03 December 2009 |
| | | | | WO | 2008002972 | A2 | 03 January 2008 |
| | | | | EP | 2039022 | A2 | 25 March 2009 |
| | | | | CN | 101479958 | A | 08 July 2009 |
| | | | | BR | PI0712995 | A2 | 10 April 2012 |
| | | | | KR | 20090031434 | A | 25 March 2009 |
| | | | | JP | 2013062844 | A | 04 April 2013 |
| | | | | CA | 2654573 | A1 | 03 January 2008 |
| | | | | SG | 148480 | A1 | 29 January 2009 |
| | | | | IN | 200806773 | P4 | 27 March 2009 |

**EP 4 380 219 A1**

**Patent documents cited in the description**

- CN 202110875718